# EUROPEAN PATENT APPLICATION

(11) **EP 4 102 379 A1**
(43) Date of publication of application: **14.12.2022**
(21) Application number: 21776765.6
(22) Date of filing: 16.03.2021
(51) Int. Cl.: G06F 16/9035

(54) **DATA SHARING METHOD, ELECTRONIC DEVICE AND SYSTEM**

(30) Priority: 26.03.2020 CN 202010225513
(71) Applicant: Huawei Technologies Co., Ltd., Longgang Shenzhen, Guangdong 518129 (CN)
(72) Inventor: LI, Tangsuo, Shenzhen, Guangdong 518129 (CN); CHEN, Shaojun, Shenzhen, Guangdong 518129 (CN); XIA, Qizhong, Shenzhen, Guangdong 518129 (CN); XIONG, Zhangliang, Shenzhen, Guangdong 518129 (CN)
(74) Representative: Grünecker Patent- und Rechtsanwälte PartG mbB
(86) International application number: PCT/CN2021/081024
(87) International publication number: WO 2021/190352

(57) **Abstract**

This application provides a data sharing method, an electronic device, and a system. The method includes: The electronic device establishes a network connection to another electronic device, where the network connection is used to communicate data; when detecting an operation of searching for a target file by a user, the electronic device requests, from the another electronic device, a shared file associated with the target file; the electronic device receives the shared file sent by the another electronic device; and the electronic device displays a first interface, where the first interface includes an identifier of a shared file of the electronic device and an identifier of a shared file of the another electronic device. Embodiments of this application help quickly view digital assets distributed on devices, which improves user experience.

## Description

This application claims priority to Chinese Patent Application No. 202010225513.8, filed with the China National Intellectual Property Administration on March 26, 2020 and entitled "DATA SHARING METHOD, ELECTRONIC DEVICE, AND SYSTEM", which is incorporated herein by reference in its entirety.

### TECHNICAL FIELD

This application relates to the terminal field, and more specifically, to a data sharing method, an electronic device, and a system.

### BACKGROUND

As a user owns more and more intelligent devices, digital assets (pictures, videos, audio, documents, and the like) of the user are scattered on these separate devices, including a mobile phone, a tablet computer, a personal computer (personal computer, PC), a smart TV, a head unit, and the like. However, if the user wants to manage the digital assets on these devices in a centralized manner, there is no convenient and effective method at present.

Currently, when transferring or sharing files such as pictures, audio, videos, and documents between devices, the user can back up pictures and videos on devices such as a mobile phone or a Pad to a PC. The PC can be used as a final storage medium. However, in this case, the user needs to perform operations periodically. Consequently, user experience is poor.

### SUMMARY

This application provides a data sharing method, an electronic device, and a system, to help quickly view digital assets distributed on devices, which improves user experience.

According to a first aspect, a system is provided. The system includes a first electronic device and a second electronic device, and the first electronic device stores a shared file of a first application. The second electronic device is configured to determine the first electronic device within a preset distance. A login account on the first electronic device is associated with a login account on the second electronic device. The second electronic device is further configured to: when detecting an operation of opening the first application by a user, request metadata corresponding to each file in the shared file from the first electronic device. The first electronic device is further configured to send the metadata of each file to the second electronic device. The second electronic device is further configured to determine a quantity of files in the shared file based on a quantity of pieces of received metadata. The second electronic device is further configured to display a first interface, and the first interface includes a folder corresponding to the shared file, a device name of the first electronic device, and the quantity of files.

In this embodiment of this application, the second electronic device may determine the first electronic device that is associated with the login account on the second electronic device and that is within the preset distance, and the second electronic device may request the metadata of the file of the application from the first electronic device. This helps the user quickly view, by using the second electronic device, a status of digital assets stored on the first electronic device, and meets a user requirement for performing centralized management on digital assets scattered on various devices, thereby improving user experience.

In addition, the first electronic device shares the metadata corresponding to each file rather than original data of each file with the second electronic device. In this case, in a data sharing process, the user may further quickly browse a status of digital assets on another device, and more storage space of the electronic device is saved.

In some possible implementations, the metadata of each file includes information such as a file name, a file size, and creation time of each file.

With reference to the first aspect, in some implementations of the first aspect, the first application is an album application. The second electronic device is further configured to request, from the first electronic device, thumbnails of one or more pictures stored on the first electronic device. The second electronic device is further configured to: after detecting an operation of tapping the folder by the user on the first interface, display at least a part of the thumbnails of the one or more pictures.

In this embodiment of this application, for the album application, the second electronic device may further request, from the first electronic device, the thumbnails of the one or more pictures in the album application in the first electronic device. In this way, after the user taps the folder, the second electronic device displays at least a part of the thumbnails of the one or more pictures to the user in a timely manner.

In some possible implementations, the second electronic device may alternatively request thumbnails of one or more pictures from the first electronic device after detecting an operation of tapping the folder by the user.

In some possible implementations, after detecting the operation of tapping the folder by the user, the second electronic device may alternatively display a plurality of sub-folders of the folder. A thumbnail is displayed on each of the plurality of sub-folders; or a thumbnail in each sub-folder is displayed on a cover page of the sub-folder.

With reference to the first aspect, in some implementations of the first aspect, the second electronic device is further configured to: when detecting an operation of tapping a first thumbnail by the user, request a first picture corresponding to the first thumbnail from the first electronic device. The thumbnails of the one or more pictures include the first thumbnail, and the first picture is a picture with preset screen resolution. The first electronic device is further configured to send the first picture to the second electronic device. The second electronic device is further configured to display a second interface, where the second interface includes the first picture.

In this embodiment of this application, when the user views, on the second electronic device, a thumbnail of a picture stored on the first electronic device, the second electronic device may request, from the first electronic device, the picture with preset screen resolution instead of original data of the picture corresponding to the thumbnail. This can ensure that the second electronic device quickly displays the picture to the user, thereby helping increase a browsing speed of the user, and saving more storage space of the electronic device.

With reference to the first aspect, in some implementations of the first aspect, the second interface further includes a first control for local storage. The second electronic device is further configured to: when detecting an operation of tapping the first control by the user, request a second picture corresponding to the first thumbnail from the first electronic device. The second picture is original data of a picture corresponding to the thumbnail. The first electronic device is further configured to send the second picture to the second electronic device. The second electronic device is further configured to store the second picture on the second electronic device.

In this embodiment of this application, the second electronic device requests original data of a picture from the first electronic device only when the user wants to store the picture on the first electronic device to the second electronic device locally. In this way, in a process in which the second electronic device displays a picture in the first electronic device to the user, the second electronic device does not need to store original data of each picture stored on the first electronic device, so that the user quickly browses a status of digital assets on another device, and more storage space of the electronic device is saved.

With reference to the first aspect, in some implementations of the first aspect, the second electronic device is further configured to: after receiving the metadata that is of each file and that is sent by the first electronic device, establish an index of the metadata of each file based on the metadata of each file. The second electronic device is further configured to display a search result based on a keyword and the index of the metadata after detecting the keyword entered by the user in a search box of the first application.

In this embodiment of this application, after obtaining the metadata of each file stored on the first electronic device, the second electronic device may establish the index of each file based on the metadata. This helps the user quickly find a file that the user wants to view.

In an embodiment, the second electronic device also stores each file of the first application (for example, the album application of the second electronic device also includes one or more pictures). In this case, the second electronic device may generate, for each file, metadata corresponding to each file, and establish an index of the metadata of each file. In this way, when detecting that the user searches for a file, the second electronic device may display a search result based on a keyword, the index of the metadata of each file stored on the second electronic device, and the index of the metadata that is of each file and that is sent by the first electronic device.

With reference to the first aspect, in some implementations of the first aspect, the first electronic device is further configured to: when detecting that the shared file is updated, send metadata of each file in an updated shared file to the second electronic device. The second electronic device is configured to receive the metadata of each file in the updated shared file and update the metadata of the shared file.

In this embodiment of this application, when the metadata in the shared file stored on the first electronic device changes, for example, the first electronic device detects that the user adds some files to or deletes some files from the shared file, the first electronic device may send updated metadata to the second electronic device. In this way, the second electronic device may update the metadata of the shared file on the first electronic device in a timely manner, and display, to the user, a change status of the file stored on the first electronic device.

In some possible implementations, when determining that the quantity of files in the shared file increases, the first electronic device may send metadata of an added file to the second electronic device, or may send metadata of each file in the shared file to the second electronic device.

With reference to the first aspect, in some implementations of the first aspect, that the login account on the first electronic device is associated with the login account on the second electronic device includes: The login account on the first electronic device is the same as the login account on the second electronic device; or the login account on the first electronic device and the login account on the second electronic device are in a same family group; or the login account on the first electronic device is an account authorized by the login account on the second electronic device.

In this embodiment of this application, data sharing between the first electronic device and the second electronic device may be performed based on a same account, or may be performed based on different accounts. This can expand a range of electronic devices that can be viewed by the second electronic device, and help the user perform centralized management on digital assets in more electronic devices.

According to a second aspect, a data sharing method is provided. The method is applied to an electronic device having a display. The method includes: The electronic device determines another electronic device within a preset distance, where a login account on the another electronic device is associated with a login account on the electronic device; when detecting an operation of opening a first application by a user, the electronic device sends request information to the another electronic device, where the request information is used to request metadata corresponding to each file in a shared file that is of the first application and that is stored on the another electronic device; the electronic device receives the metadata that corresponds to each file in the shared file and that is sent by the another electronic device; and the electronic device displays a first interface by using the display, where the first interface includes a folder corresponding to the shared file, a device name of the another electronic device, and a quantity of files, where the quantity of files is determined by the electronic device based on a quantity of pieces of received metadata.

With reference to the second aspect, in some implementations of the second aspect, the first application is an album application. The method further includes: Before displaying the first interface, the electronic device requests, from the another electronic device, thumbnails of one or more pictures stored on the another electronic device; and after detecting an operation of tapping the folder by the user on the first interface, the electronic device displays at least a part of the thumbnails of the one or more pictures.

With reference to the second aspect, in some implementations of the second aspect, the method further includes: When detecting an operation of tapping a first thumbnail by the user, the electronic device requests a first picture corresponding to the first thumbnail from the another electronic device, where the thumbnails of the one or more pictures include the first thumbnail, and the first picture is a picture with preset screen resolution; the electronic device receives the first picture sent by the another electronic device; and the electronic device displays a second interface by using the display, where the second interface includes the first picture.

With reference to the second aspect, in some implementations of the second aspect, the second interface further includes a first control for local storage. The method further includes: When detecting an operation of tapping the first control by the user, the electronic device requests a second picture corresponding to the first thumbnail from the another electronic device, where the second picture is original data of a picture corresponding to the thumbnail; and the electronic device receives and stores the second picture that is sent by the another electronic device.

With reference to the second aspect, in some implementations of the second aspect, the method further includes: After receiving the metadata that is of each file and that is sent by the another electronic device, the electronic device establishes an index of the metadata of each file based on the metadata of each file; and the electronic device displays a search result based on a keyword and the index of the metadata after detecting the keyword entered by the user in a search box of the first application.

With reference to the second aspect, in some implementations of the second aspect, the method further includes: The electronic device receives and stores metadata of each file in an updated shared file on the another electronic device.

With reference to the second aspect, in some implementations of the second aspect, that a login account on the another electronic device is associated with a login account on the electronic device includes: The login account on the electronic device is the same as the login account on the another electronic device; or the login account on the electronic device and the login account on the another electronic device are in a same family group; or the login account on the electronic device is an account authorized by the login account on the another electronic device.

According to a third aspect, a system is provided. The system includes a first electronic device and a second electronic device. The first electronic device is configured to establish a network connection to the second electronic device, and the network connection is used to transmit data. The first electronic device is further configured to: when detecting an operation of searching for a target file by a user, request, from the second electronic device, a shared file associated with the target file. The second electronic device is further configured to send the shared file to the first electronic device. The first electronic device is further configured to display a first interface, where the first interface includes an identifier of a shared file of the first electronic device and an identifier of a shared file of the second electronic device.

In this embodiment of this application, after the first electronic device establishes the network connection to the second electronic device, when the user wants to view, by using the first electronic device, a file scattered on the second electronic device, the first electronic device may request a shared file from the second electronic device, so that the first electronic device displays an identifier of the shared file to the user. This actually can help the user view, on one device, information about digital assets distributed on other devices, and meet a user requirement for performing centralized management on the information about the digital assets scattered on various devices.

In some possible implementations, the identifier of the shared file of the first electronic device may be a folder or a thumbnail. The identifier of the shared file of the second electronic device may also be a folder or a thumbnail.

With reference to the third aspect, in some implementations of the third aspect, the shared file includes original data or metadata, and the metadata is attribute description information of each file in the shared file.

In this embodiment of this application, the second electronic device may send metadata information of the shared file to the first electronic device. In this case, in a data sharing process, the user may quickly browse a status of digital assets on another device, and more storage space of the electronic device is saved.

With reference to the third aspect, in some implementations of the third aspect, the first interface further includes a device name of the second electronic device.

In this embodiment of this application, the device name of the second electronic device is displayed on the display interface. This can help the user quickly find a status of digital assets that are on the electronic device and that the user wants to view.

With reference to the third aspect, in some implementations of the third aspect, that the first electronic device establishes a network connection to the second electronic device includes that the first electronic device communicates with the second electronic device through a short-range wireless connection, or the first electronic device communicates with the second electronic device through a long-range wireless connection.

In this embodiment of this application, the first electronic device and the second electronic device may establish a connection by using a short-range wireless communication technology, or may establish a connection by using a long-range wireless communication technology. In this way, the user can quickly view a status of digital assets on a near field or far field device by using the first electronic device, and the user can conveniently perform centralized management on the digital assets scattered on the near field or far field device.

With reference to the third aspect, in some implementations of the third aspect, the shared file is a multimedia file. The first electronic device is further configured to request, from the second electronic device, thumbnails of one or more multimedia files stored on the second electronic device.

With reference to the third aspect, in some implementations of the third aspect, the first electronic device is further configured to: when detecting an operation of tapping a first thumbnail by the user, request a first multimedia file corresponding to the first thumbnail from the second electronic device, where the thumbnails of the one or more multimedia files include the first thumbnail, and the first multimedia file is a multimedia file with preset screen resolution. The second electronic device is further configured to send the first multimedia file to the first electronic device. The first electronic device is further configured to display a second interface, where the second interface includes the first multimedia file.

With reference to the third aspect, in some implementations of the third aspect, the second interface further includes a first control for local storage. The first electronic device is further configured to: when detecting an operation of tapping the first control by the user, request a second multimedia file corresponding to the first thumbnail from the second electronic device, where the second multimedia file is original data of a multimedia file corresponding to the thumbnail. The second electronic device is further configured to send the second multimedia file to the first electronic device. The first electronic device is further configured to store the second multimedia file on the first electronic device.

With reference to the third aspect, in some implementations of the third aspect, the shared file includes the metadata. The first electronic device is further configured to: after receiving metadata that is of each file and that is sent by the second electronic device, establish an index of the metadata of each file based on the metadata of each file. The first electronic device is further configured to display a search result based on a keyword entered by the user and the index of the metadata.

With reference to the third aspect, in some implementations of the third aspect, the second electronic device is further configured to: when detecting that the shared file is updated, send an updated shared file to the first electronic device. The first electronic device is configured to receive the updated shared file sent by the second electronic device.

With reference to the third aspect, in some implementations of the third aspect, the first electronic device is further configured to: before establishing the network connection to the second electronic device, determine that a login account on the first electronic device is associated with a login account on the second electronic device.

According to a fourth aspect, a data sharing method is provided. The method is applied to an electronic device. The method includes: The electronic device establishes a network connection to another electronic device, where the network connection is used to transmit data; when detecting an operation of searching for a target file by a user, the electronic device requests, from the another electronic device, a shared file associated with the target file; the electronic device receives the shared file sent by the another electronic device; and the electronic device displays a first interface, where the first interface includes an identifier of a shared file of the electronic device and an identifier of a shared file of the another electronic device.

With reference to the fourth aspect, in some implementations of the fourth aspect, the shared file includes original data or metadata, and the metadata is attribute description information of each file in the shared file.

With reference to the fourth aspect, in some implementations of the fourth aspect, the first interface further includes a device name of the another electronic device.

With reference to the fourth aspect, in some implementations of the fourth aspect, that the electronic device establishes a network connection to the another electronic device includes that the electronic device communicates with the another electronic device through a short-range wireless connection, or the electronic device communicates with the another electronic device through a long-range wireless connection.

With reference to the fourth aspect, in some implementations of the fourth aspect, the shared file is a multimedia file. The method further includes: The electronic device requests, from the another electronic device, thumbnails of one or more multimedia files stored on the another electronic device.

With reference to the fourth aspect, in some implementations of the fourth aspect, the method further includes: When detecting an operation of tapping a first thumbnail by the user, the electronic device requests a first multimedia file corresponding to the first thumbnail from the another electronic device, where the thumbnails of the one or more multimedia files include the first thumbnail, and the first multimedia file is a multimedia file with preset screen resolution; the electronic device receives the first multimedia file sent by the another electronic device; and the electronic device displays a second interface, where the second interface includes the first multimedia file.

With reference to the fourth aspect, in some implementations of the fourth aspect, the second interface further includes a first control for local storage. The method further includes: When detecting an operation of tapping the first control by the user, the electronic device requests a second multimedia file corresponding to the first thumbnail from the another electronic device, where the second multimedia file is original data of a multimedia file corresponding to the thumbnail; the electronic device receives the second multimedia file sent by the another electronic device; and the electronic device stores the second multimedia file on the electronic device.

With reference to the fourth aspect, in some implementations of the fourth aspect, the shared file includes the metadata. The method further includes: After receiving metadata that is of each file and that is sent by the another electronic device, the electronic device establishes an index of the metadata of each file based on the metadata of each file; and the electronic device displays a search result based on a keyword entered by the user and the index of the metadata.

With reference to the fourth aspect, in some implementations of the fourth aspect, the method further includes: The electronic device receives an updated shared file sent by the another electronic device.

With reference to the fourth aspect, in some implementations of the fourth aspect, the method further includes: before establishing the network connection to the another electronic device, determining that a login account on the electronic device is associated with a login account on the another electronic device.

According to a fifth aspect, an apparatus is provided. The apparatus is included in an electronic device, and has a function of implementing behavior of the electronic device according to the second aspect and the possible implementations of the second aspect and the fourth aspect. The function may be implemented by hardware, or may be implemented by hardware by executing corresponding software. The hardware or the software includes one or more modules or units corresponding to the foregoing function.

According to a sixth aspect, an electronic device is provided, including one or more processors, a memory, and one or more computer programs. The one or more computer programs are stored in the memory, and the one or more computer programs include instructions. When the instructions are executed by the electronic device, the electronic device is enabled to perform the data sharing method according to any possible implementation of the second aspect and the fourth aspect.

According to a seventh aspect, an electronic device is provided in this technical solution and includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the data sharing method according to any possible implementation of the second aspect and the fourth aspect.

According to an eighth aspect, a computer storage medium is provided in this technical solution and includes computer instructions. When the computer instructions are run on an electronic device, the electronic device is enabled to perform the data sharing method according to any possible implementation of the second aspect and the fourth aspect.

According to a ninth aspect, a computer program product is provided in this technical solution. When the computer program product is run on an electronic device, the electronic device is enabled to perform the data sharing method according to any possible design of the second aspect and the fourth aspect.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3(a) to FIG. 3(g) are a group of GUIs according to an embodiment of this application;
FIG. 4(a) and FIG. 4(b) are another group of GUIs according to an embodiment of this application;
FIG. 5(a) to FIG. 5(d) are another group of GUIs according to an embodiment of this application;
FIG. 6(a) to FIG. 6(c) are another group of GUIs according to an embodiment of this application;
FIG. 7 is a diagram of another software structure of an electronic device according to an embodiment of this application;
FIG. 8(a) and FIG. 8(b) are a data sharing process between a device A and a device B according to an embodiment of this application;
FIG. 9 is a schematic diagram of distributed browse, search, and management for pictures and videos according to an embodiment of this application;
FIG. 10(a) to FIG. 10(e)-3 are another group of GUIs according to an embodiment of this application; and
FIG. 11 is a schematic flowchart of a data sharing method according to an embodiment of this application.

### DESCRIPTION OF EMBODIMENTS

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly. It should also be understood that, in the following embodiments of this application, "at least one" and "one or more" mean one, two, or more than two. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects.

The following describes an electronic device, a user interface used for such an electronic device, and embodiments for using such an electronic device. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of a portable electronic device includes but is not limited to a portable electronic device using iOS^{®}, Android^{®}, Microsoft^{®}, or another operating system. The portable electronic device may alternatively be another portable electronic device such as a laptop computer (Laptop). It should also be understood that, in some other embodiments, the electronic device may not be a portable electronic device alternatively, but a desktop computer.

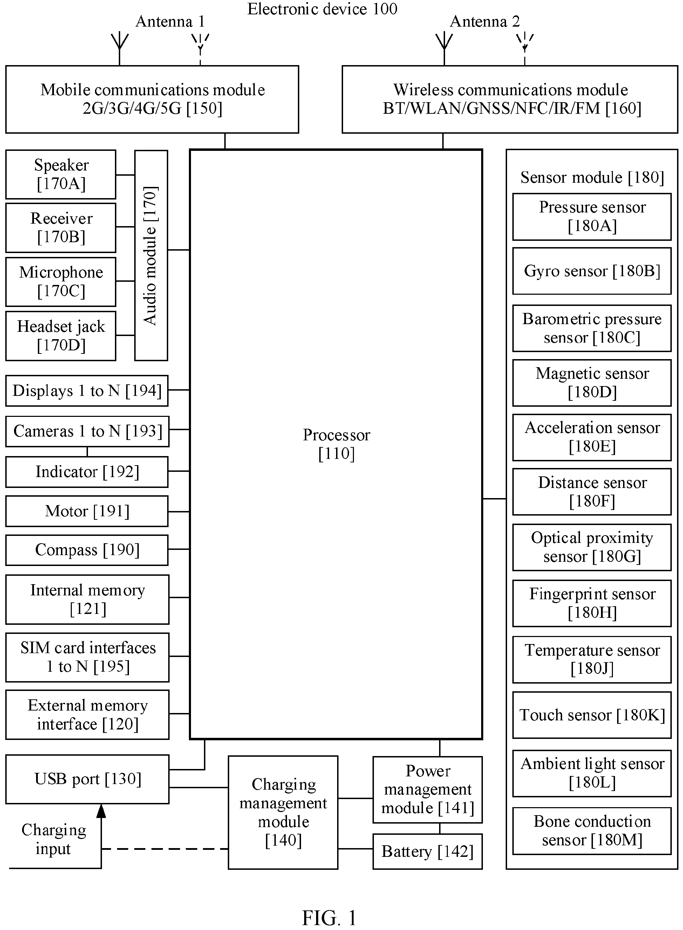

For example, FIG. 1 is a schematic diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may also include one or more processors 110. The controller may generate an operation control signal based on an instruction operation code and a time sequence signal, to complete control of instruction fetching and instruction execution. In some other embodiments, a memory may further be disposed in the processor 110, and is configured to store instructions and data. For example, the memory in the processor 110 may be a cache. The memory may store instructions or data that are/is just used or cyclically used by the processor 110. If the processor 110 needs to use the instructions or the data again, the processor 110 may directly invoke the instructions or the data from the memory. This avoids repeated access and reduces waiting time of the processor 110, thereby improving data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB port, and/or the like. The USB port 130 is a port that complies with a USB standard specification, and may be specifically a mini USB port, a micro USB port, a USB Type-C port, or the like. The USB port 130 may be configured to connect to a charger to charge the electronic device 100, or may be used for data transmission between the electronic device 100 and a peripheral device. The USB port 130 may alternatively be configured to connect to a headset, to play audio by using the headset.

It can be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners. The charging management module 140 is configured to receive a charging input from the charger. The charging management module 140 may receive a charging input of a wired charger through the USB port 130. In some embodiments of wireless charging, the charging management module 140 may receive a wireless charging input by using a wireless charging coil of the electronic device 100. The charging management module 140 supplies power to the electronic device by using the power management module 141 while charging the battery 142. The power management module 141 is configured to connect the battery 142 and the charging management module 140 to the processor 110.

A wireless communication function of the electronic device 100 may be implemented by using the antenna 1, the antenna 2, the mobile communications module 150, the wireless communications module 160, the modem processor, the baseband processor, and the like.

The wireless communications module 160 may provide wireless communication solutions applied to the electronic device 100, for example, a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini light-emitting diode (mini light-emitting diode, mini-LED), a micro-LED, a micro-OLED, a quantum dot light-emitting diode (quantum dot light-emitting diode, QLED), or the like. In some embodiments, the electronic device 100 may include one or more displays 194.

In some embodiments of this application, when the display panel is made of a material such as an OLED, an AMOLED, or an FLED, the display 194 in FIG. 1 can be bent. Herein, that the display 194 can be bent means that the display can be bent to any angle in at least a partial area, and can be maintained at the angle. For example, the display 194 can be folded in half from left to right, or can be folded in half up and down.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image.

The camera 193 is configured to capture a static image or a video. The external memory interface 120 may be configured to connect to an external storage card, for example, a micro SD card, to extend a storage capability of the electronic device 100.

The external storage card communicates with the processor 110 through the external memory interface 120, to implement a data storage function. For example, files such as music and a video are stored in the external storage card.

The internal memory 121 may be configured to store one or more computer programs, where the one or more computer programs include instructions. The processor 110 may run the instructions stored in the internal memory 121, so that the electronic device 100 is enabled to perform a data sharing method provided in some embodiments of this application, various applications, data processing, and the like.

The electronic device 100 may implement an audio function by using the audio module 170, the speaker 170A, the receiver 170B, the microphone 170C, the headset jack 170D, the application processor, and the like, for example, implement a music playback function and a recording function.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The gyro sensor 180B may be configured to determine a motion posture of the electronic device 100. In some embodiments, an angular velocity of the electronic device 100 around three axes (namely, axes X, Y, and Z) may be determined by using the gyro sensor 180B. The acceleration sensor 180E may detect accelerations in various directions (usually on three axes) of the electronic device 100, and may detect magnitude and a direction of gravity when the electronic device 100 is still. The acceleration sensor 180E may be further configured to recognize a posture of the electronic device, and is used in screen switching between a landscape mode and a portrait mode, a pedometer, or another application.

The magnetic sensor 180D includes a Hall effect sensor. The electronic device 100 may detect opening and closing of a flip cover by using the magnetic sensor 180D.

The acceleration sensor 180E may detect accelerations in various directions (usually on three axes) of the electronic device 100, and may detect magnitude and a direction of gravity when the electronic device 100 is still. The acceleration sensor 180E may be further configured to recognize a posture of the electronic device, and is used in screen switching between a landscape mode and a portrait mode, a pedometer, or another application.

The distance sensor 180F is configured to measure a distance.

The optical proximity sensor 180G may include, for example, a light-emitting diode (LED) and an optical detector, for example, a photodiode. The light-emitting diode may be an infrared light-emitting diode.

The ambient light sensor 180L is configured to sense ambient light brightness. The fingerprint sensor 180H is configured to collect a fingerprint. The electronic device 100 may implement fingerprint-based unlocking, application lock access, fingerprint-based photographing, fingerprint-based call answering, and the like by using a feature of the collected fingerprint.

In this embodiment of this application, the fingerprint sensor may include an in-screen fingerprint sensor located below a side screen. The in-screen fingerprint sensor may be located in an area of the side screen. When performing unlocking by using the side screen, the user may press or touch the area. Alternatively, when performing unlocking by using a fingerprint, the user may press or touch any area on the side screen, so that the in-screen fingerprint sensor can detect fingerprint information of the user and verify the fingerprint information.

The temperature sensor 180J is configured to detect a temperature.

The touch sensor 180K is also referred to as a "touch panel". The touch sensor 180K may be disposed in the display 194, and the touch sensor 180K and the display 194 form a touchscreen, which is also referred to as a "touch control screen". The touch sensor 180K is configured to detect a touch operation performed on or near the touch sensor 180K. The touch sensor may transfer the detected touch operation to the application processor, to determine a type of a touch event. Visual output related to the touch operation may be provided on the display 194. In some other embodiments, the touch sensor 180K may alternatively be disposed on a surface of the electronic device 100 at a location different from a location of the display 194.

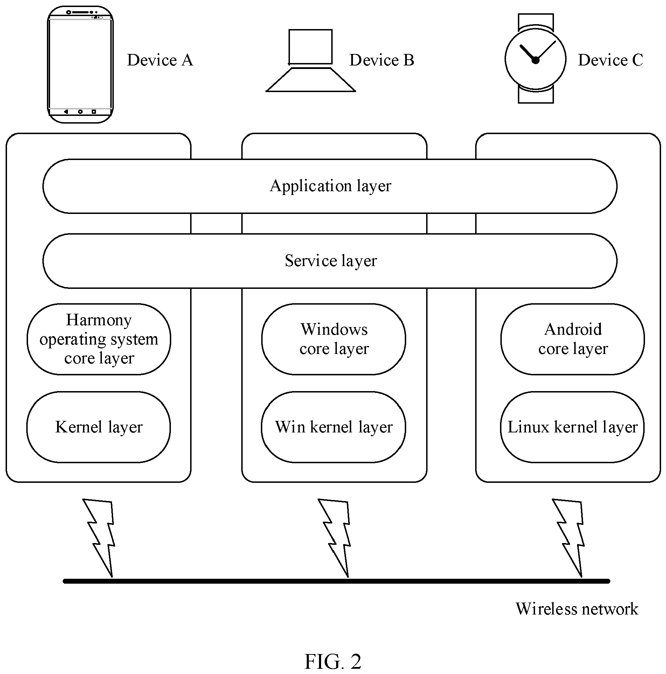

FIG. 2 is a block diagram of the software structure of the electronic device 100 according to an embodiment of this application. In a hierarchical architecture, software is divided into several layers, and each layer has a clear role and responsibility. The layers communicate with each other through a software interface. In some embodiments, software architectures of a device A, a device B, and a device C are divided into four layers. The device A, the device B, and the device C all include a distributed application layer and a service layer. The device A further includes a Harmony (Harmony) operating system core layer and a Linux kernel layer. The device B further includes a Windows core layer and a Windows kernel layer. The device C further includes an Android core layer and a Linux kernel layer.

The application layer may include distributed applications such as a camera, a gallery, file management, music, videos, and contacts.

In this embodiment of this application, the service layer may include a device knowledge library, device authentication management, and a device data storage area. The device knowledge library may store device names, device types, device status information, capability information, and address information of a current device and another device. The device status information is used to indicate whether a device is online or offline. The device capability information is used to indicate whether a device supports data sharing.

In this embodiment of this application, another device stored in the device knowledge library may be a device that is associated with an account of the current device; or another device may be a device that is not associated with an account of the current device, for example, the current device and the another device may be devices in a same social software group (for example, the another device may be a device of a user friend in an address book, or the another device may be a device in a same WeChat group as the current device); or another device may be a device to which no account is logged in.

The device authentication management may be applied to a process in which the current device performs authentication on the another device. For example, after the current device receives a device name sent by the another device, the current device may determine, based on the device name of the another device, whether the current device and the another device are devices under a same account. For example, a user account A includes a device A, a device B, and a device C. In this case, after receiving device name information that is of the device B and that is sent by the device B, the device A may determine, based on device names that are of a plurality of devices under the account A and that are stored on the device A, that the device B is a device under the same account.

For example, the current device may determine, based on a device name of the another device, whether the current device and the another device are devices in a same family group. For example, the same family group includes an account A and an account B, the account A includes a device A, a device B, and a device C, and the account B includes a device D, a device E, and a device F. In this case, after receiving a device name that is of the device D and that is sent by the device D, the device A may determine, based on device names that are of a plurality of devices under the account B and that are stored on the device A, that the device B is a device in the same family group.

For example, the current device may alternatively perform authentication on some devices to which no account is logged in. For example, a device A may invoke a lightweight computing platform interface to generate a QR code. A device G (a device to which no account is logged in) may scan the QR code on the device A to obtain a media access control (media access control, MAC) address, an Internet protocol (Internet protocol, IP) address, public key information, a challenge value, and the like of the device A. The device G may encrypt a public key of the device G by using the public key information of the device A, and send an encrypted public key to the device A. The device A may decrypt the encrypted public key of the device G by using a public key of the device A, to obtain the public key of the device G. In this way, authentication between the device A and the device G is completed. After the authentication on the device G succeeds, the device A may store a device name, a device type, device status information, capability information, and address information of the device G in a device knowledge library.

In this embodiment of this application, the devices under the same account or the devices in the same family group may be directly trusted by using a trust ring.

The device data storage area can be used by the current device to store data (for example, picture information, video information, document information, audio information, and the like) of the another device. An SDK interface of the distributed application layer may invoke data in the device data storage area to display data on the another device to the user through a user interface.

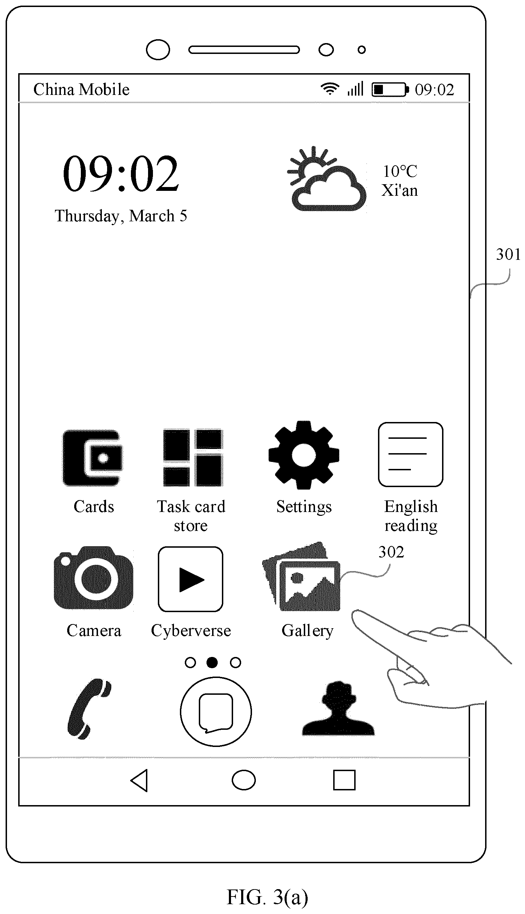

FIG. 3(a) to FIG. 3(g) show a group of graphical user interfaces (graphical user interfaces, GUIs) of a mobile phone.

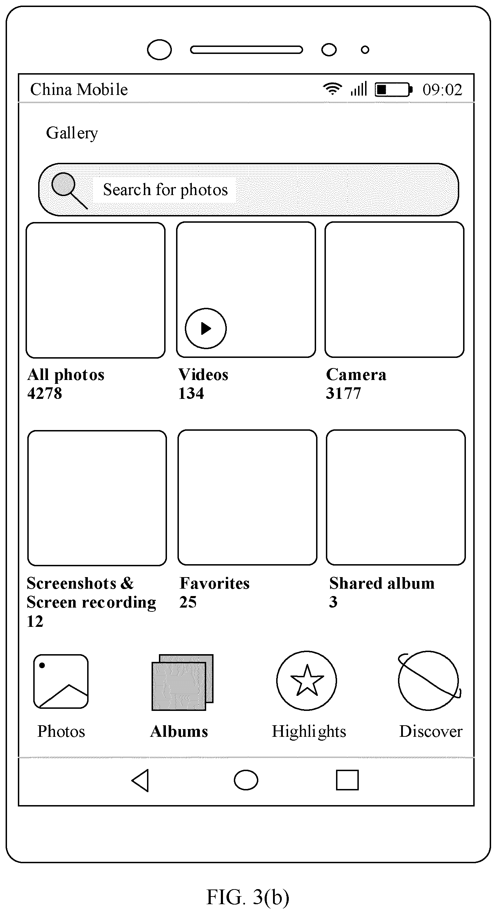

Refer to FIG. 3(a). The GUI is a home screen 301 of the mobile phone. After detecting an operation of tapping an icon 302 of an album application (application, APP) on the home screen 301 by a user, the mobile phone may open the album application, and display a GUI shown in FIG. 3(b).

Refer to FIG. 3(b). The GUI is a display interface of the album application. The display interface may display that the mobile phone currently stores 4,278 photos and 134 videos. 3,177 photos are obtained by a camera, 12 photos are obtained through screenshot and screen recording, 25 photos are in favorites, and three photos are in a shared album. In addition, when detecting the operation of opening the album application by the user, the mobile phone also automatically searches for a device nearby under a same account. For example, an account of a user A is currently logged in to the mobile phone. There may further be another device (such as another mobile phone, a large-screen device, a Pad, or a smartwatch) under the account of the user A. In this case, the mobile phone searches for the another device nearby by using the account of the user A.

In this embodiment of this application, a plurality of devices under a same account may be directly authorized by using a trust ring. When the mobile phone detects the operation of opening the album application by the user, the mobile phone may determine devices that are under the account of the user A and that are within a preset distance from the mobile phone. For other devices within the preset distance and under the account of the user A, the mobile phone may initiate service requests to these devices. The service requests may be used to request digital assets (for example, photos, videos, or files) stored on these devices. In this way, the digital assets on these devices are displayed on the mobile phone.

In an embodiment, before the mobile phone detects the operation of tapping the icon 302 by the user, the mobile phone may search for near field or far field devices. After the mobile phone detects the operation of tapping the icon 302 by the user, the mobile phone may directly display other devices that are found.

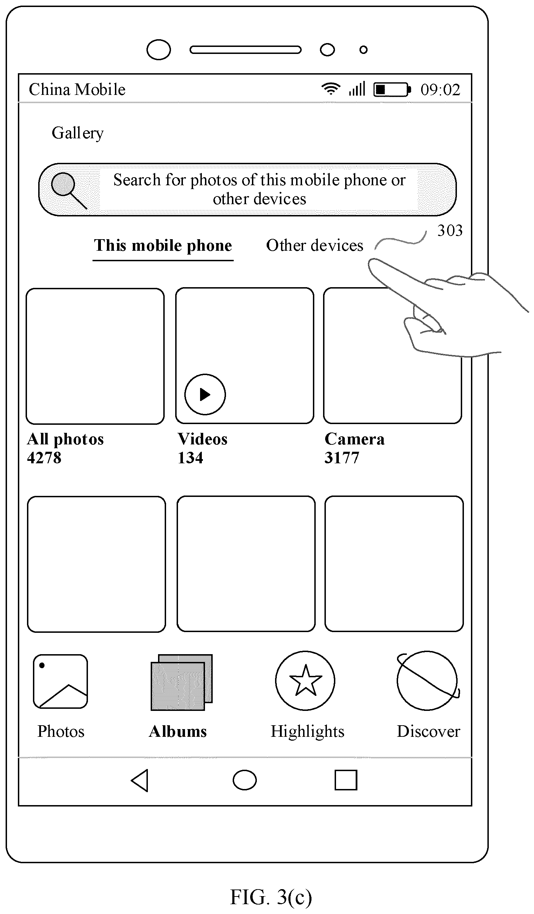

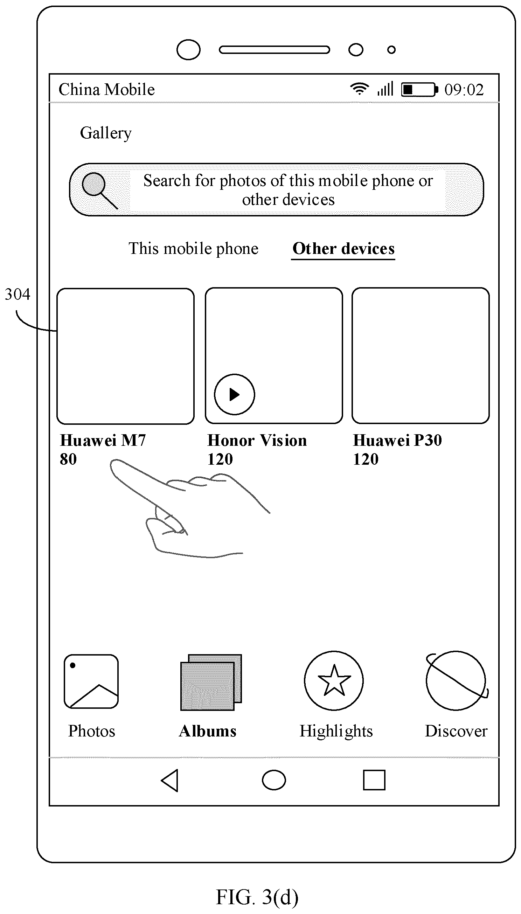

Refer to FIG. 3(c). The GUI is another display interface of the album application. When the mobile phone finds another device within the preset distance and under the account of the user A, a subtitle "other devices" may be automatically displayed. The user can select "local" and "other devices" for browsing. After detecting an operation of tapping the "other devices" control by the user, the mobile phone may display a GUI shown in FIG. 3(d).

In an embodiment, the mobile phone may periodically send a broadcast message to devices nearby before detecting that the user opens the album application. The broadcast message is used to search for another electronic device within the preset distance and under an account that is associated with a login account on the mobile phone. When the mobile phone detects that the user opens the album application, "local" and "other devices" may be directly displayed, where the "other devices" are electronic devices that meet a condition and that are found by the mobile phone.

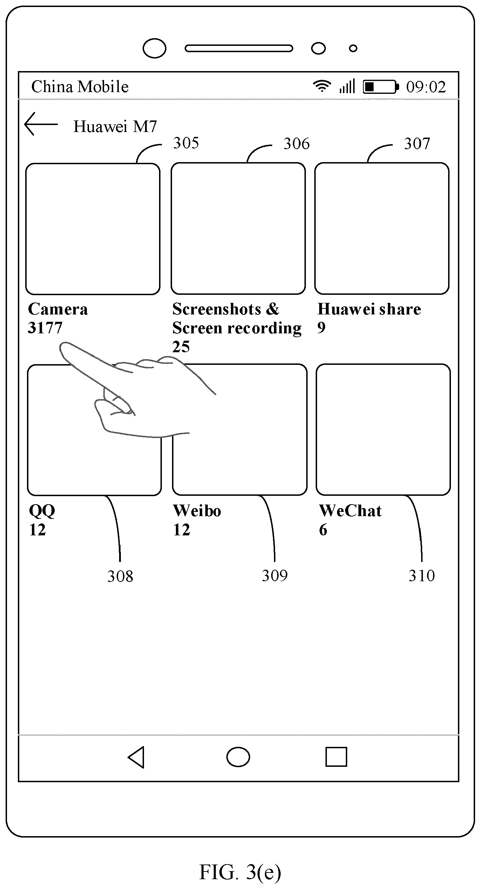

Refer to FIG. 3(d). The GUI is another display interface of the album application. The display interface may display information about other devices that are within the preset distance and under the account of the user A and that are found by the mobile phone, including Huawei M7, Honor Vision, and Huawei P30. The mobile phone may obtain information about a quantity of digital assets (for example, photos) on the other devices. As shown in FIG. 3(d), a quantity of photos stored on Huawei M7 is 80, a quantity of photos stored on Honor Vision is 120, and a quantity of photos stored on Huawei P30 is 120. When the mobile phone detects an operation that the user taps to view an album folder of Huawei M7, the mobile phone may display a GUI shown in FIG. 3(e).

In an embodiment, FIG. 3(d) may display a folder, a device name, and a quantity of files of another device, or may display only some of the folder, the device name, and the quantity of files of the another device, or may display information about only the folder or other identifier information. After the user taps identifier information of the another device, information such as the device name and the quantity of files may be displayed.

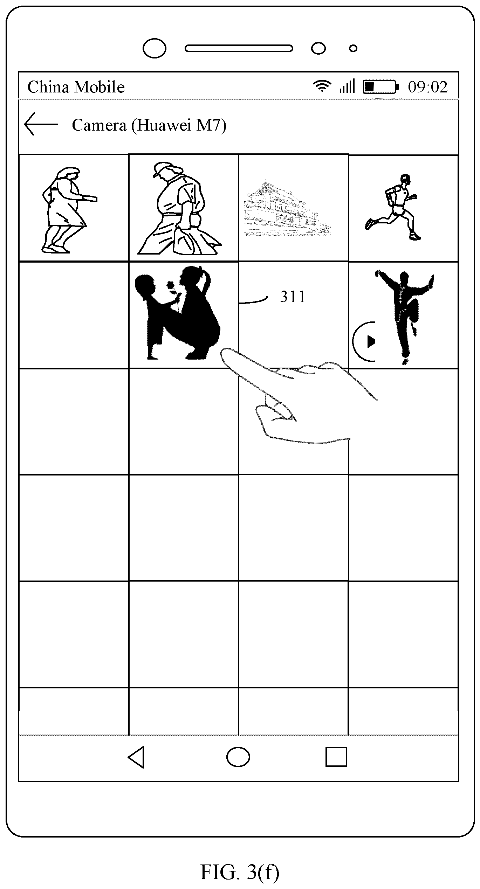

Refer to FIG. 3(e). The GUI is a display interface of an album of another device. The mobile phone may display information about a folder stored on the another device (Huawei M7). An album of Huawei M7 includes a folder 305, a folder 306, a folder 307, a folder 308, a folder 309, and a folder 310. Photos in the folder 305 are obtained by using a camera of Huawei M7, and a quantity of photos in the folder 305 is 3,177. Photos in the folder 306 are obtained through screenshot and screen recording, and a quantity of photos in the folder 306 is 25. Photos in the folder 307 are obtained through data sharing (Huawei Share), and a quantity of photos in the folder 307 is 9. Photos in the folder 308 are obtained by using a social application (for example, QQ), and a quantity of photos in the folder 308 is 12. Photos in the folder 309 are obtained by using a social application (for example, Weibo), and a quantity of photos in the folder 309 is 12. Photos in the folder 310 are obtained by using a social application (for example, WeChat), and a quantity of photos in the folder 310 is 6. After detecting an operation of tapping the folder 305 by the user, the mobile phone may display a GUI shown in FIG. 3(f).

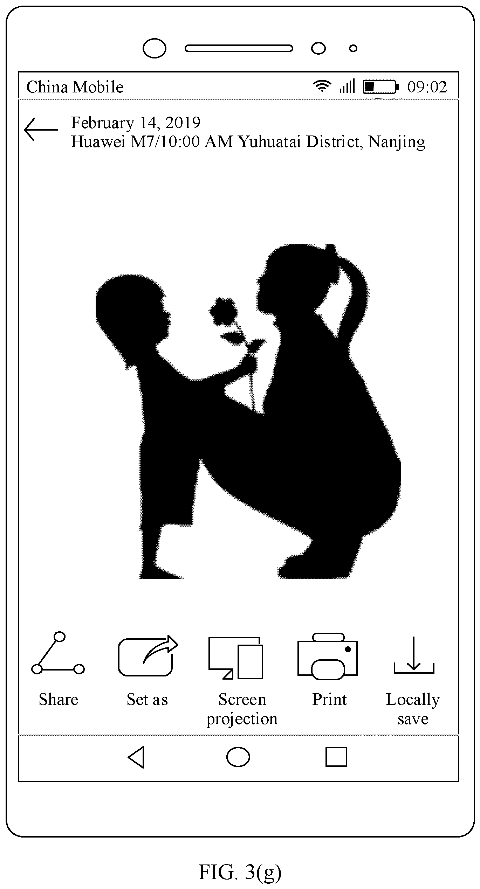

Refer to FIG. 3(f). The GUI is a display interface of the folder 305. The user may view the photos and videos stored in the folder 305 by sliding the screen upward. After detecting an operation of tapping a thumbnail 311 by the user, the mobile phone may display a GUI shown in FIG. 3(g).

In an embodiment, when the mobile phone detects the operation that the user taps to view the album of Huawei M7, the mobile phone may directly display the GUI shown in FIG. 3(f).

Refer to FIG. 3(g). The GUI is a large-image preview screen corresponding to the thumbnail 311. The large-image preview screen may further display detailed information about a photo. For example, the photo is taken at 10:00 AM on February 14, 2019, an electronic device used to take the photo is Huawei M7, and the photo is taken in Yuhuatai District, Nanjing. The large-image preview screen may further display function controls such as a sharing function, a "set as" function, a screen projection function, a printing function, and a locally saving function.

After detecting the operation of tapping the thumbnail 311 by the user, the mobile phone may request information about a picture with preset screen resolution from Huawei M7. As shown in FIG. 3(g), a picture displayed on the interface may not be original data of the picture, but a picture with preset screen resolution (for example, a picture with a 1080 x 1920 pixel value).

For example, the user may share the photo 311 with a friend of the user by using the sharing function. The user may alternatively set the photo 311 as a home screen wallpaper, a contact avatar, or the like by using the "set as" function. The user may alternatively project, by using the screen projection function, the photo 311 to a large-screen device for browsing. The user may alternatively print the photo 311 by using the printing function. The user may alternatively save the photo 311 to the mobile phone by using the locally saving function.

In an embodiment, when detecting that the user taps the sharing function, the "set as" function, the screen protection function, the printing function, or the locally saving function, the mobile phone may prompt, by using a prompt box, the user to save original data or save a picture with preset screen resolution. For example, when the mobile phone detects that the user taps to save the original data, the mobile phone may request data of an original picture from Huawei M7. For another example, when the mobile phone detects that the user taps to save the picture with the preset screen resolution, the mobile phone may directly save the picture with the preset screen resolution locally.

In this embodiment of this application, the user may view, by using an electronic device under an account of the user, digital assets on other electronic devices under the account, which meets a user requirement for performing centralized management on the digital assets (for example, pictures, videos, audio, and documents) scattered on the devices, reduces redundant operations when the user views the digital assets on the devices, and helps improve user experience.

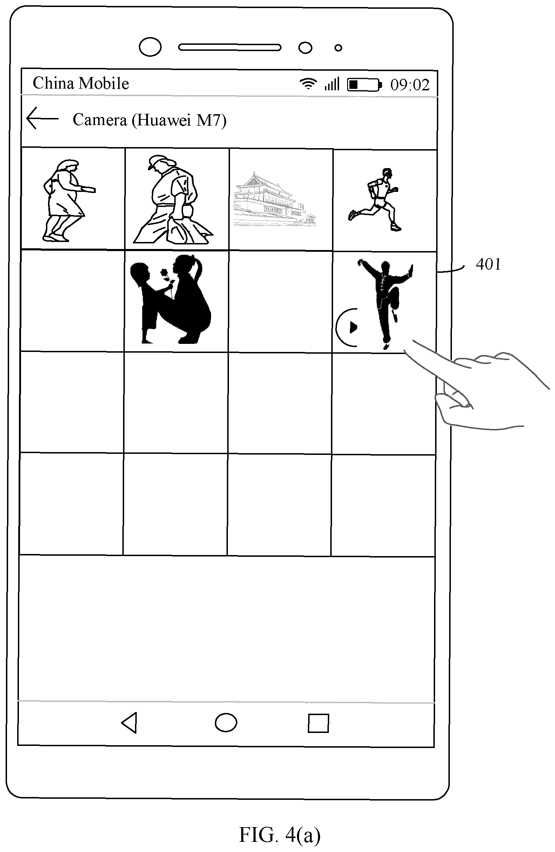

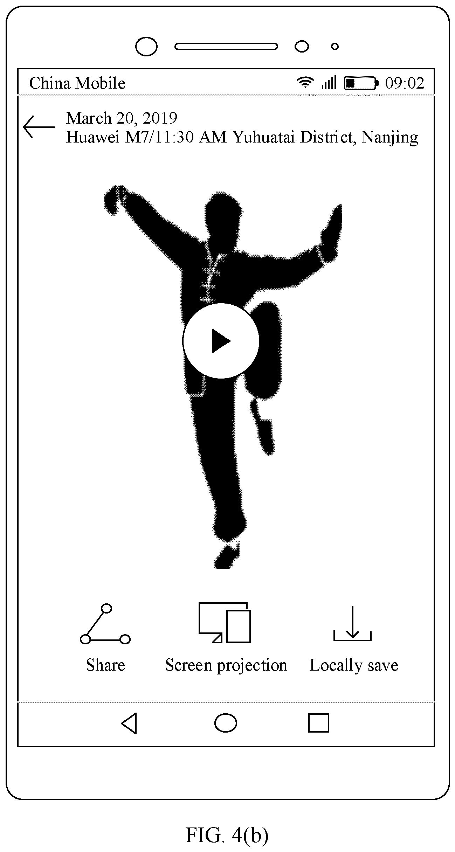

The GUIs in FIG. 3(a) to FIG. 3(g) describe a process in which a user views a photo on another device through a mobile phone. FIG. 4(a) and FIG. 4(b) show another group of GUIs according to an embodiment of this application, and describe a process in which a user views a video on another device by using a mobile phone.

Refer to FIG. 4(a). The GUI is a display interface of the folder 305. The user may view photos and videos stored in the folder 305 by sliding the screen upward. After detecting an operation of tapping a video 401 by the user, the mobile phone may display a GUI shown in FIG. 4(b).

Refer to FIG. 4(b). The GUI is a large-image preview screen of the video 401. The large-image preview screen may further display detailed information about the video 401. For example, the video 401 is shot at 11:30 AM on March 20, 2019, an electronic device used to shoot the video 401 is Huawei M7, and the video 401 is shot in Yuhuatai District, Nanjing. The large-image preview screen may further display function controls such as a sharing function, a screen projection function, and a locally saving function.

For example, the user may share the video 401 with a friend of the user by using the sharing function. The user may alternatively project, by using the screen projection function, the video 401 to a large-screen device for browsing. The user may alternatively save the video 401 to the mobile phone by using the locally saving function.

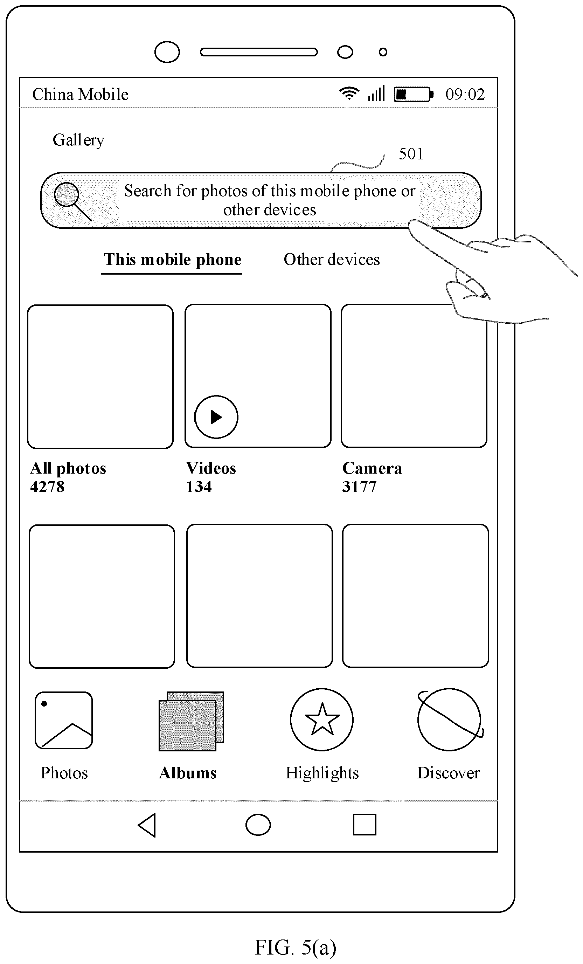

FIG. 5(a) to FIG. 5(d) show another group of GUIs according to an embodiment of this application.

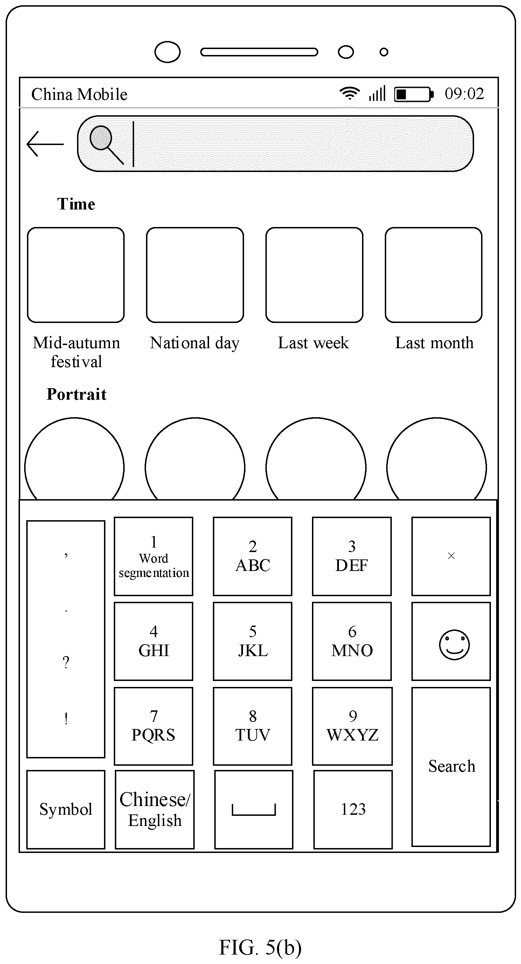

Refer to FIG. 5(a). The GUI is a display interface of an album application. After detecting an operation of tapping a search box 501 by a user, a mobile phone may display a GUI shown in FIG. 5(b).

Refer to FIG. 5(b). The GUI is a search interface of the album application. When the mobile phone has not detected a search keyword entered by the user, the mobile phone may automatically display classification information of photos to the user. For example, the mobile phone may classify photos on this mobile phone and other devices by time, portraits, locations, and labels. The user can view the classification information without entering a search keyword.

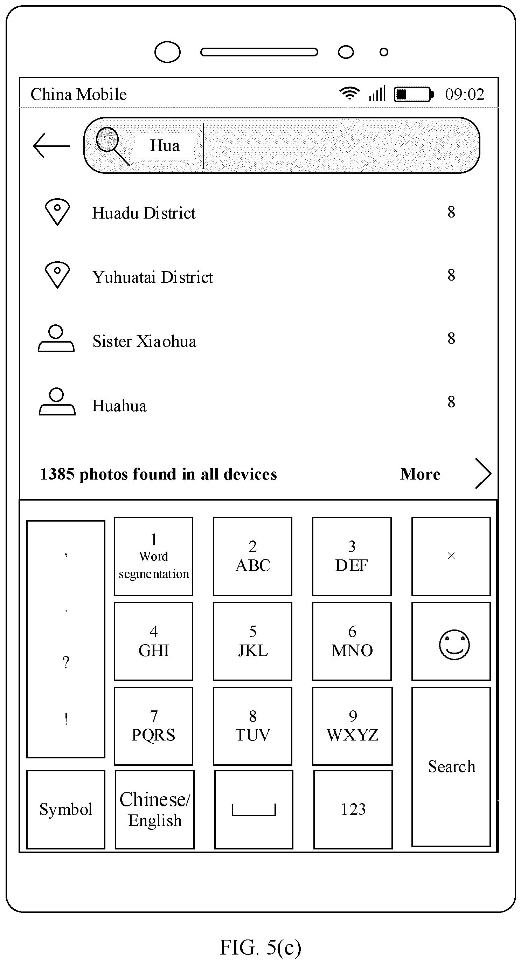

Refer to FIG. 5(c). The GUI is another search interface of the album application. When the mobile phone detects that the user has entered a keyword "hua" in the search box, the mobile phone may classify photos related to "hua" in this mobile phone and the other devices.

For example, the mobile phone finds a total of 1,385 photos related to "hua" in this mobile phone and the other devices. The mobile phone may find, in this mobile phone and the other devices, eight photos taken in Huadu District, Nanjing, eight photos taken in Yuhuatai District, Nanjing, eight photos of a contact "sister Xiaohua", eight photos of a contact "Huahua", and the like.

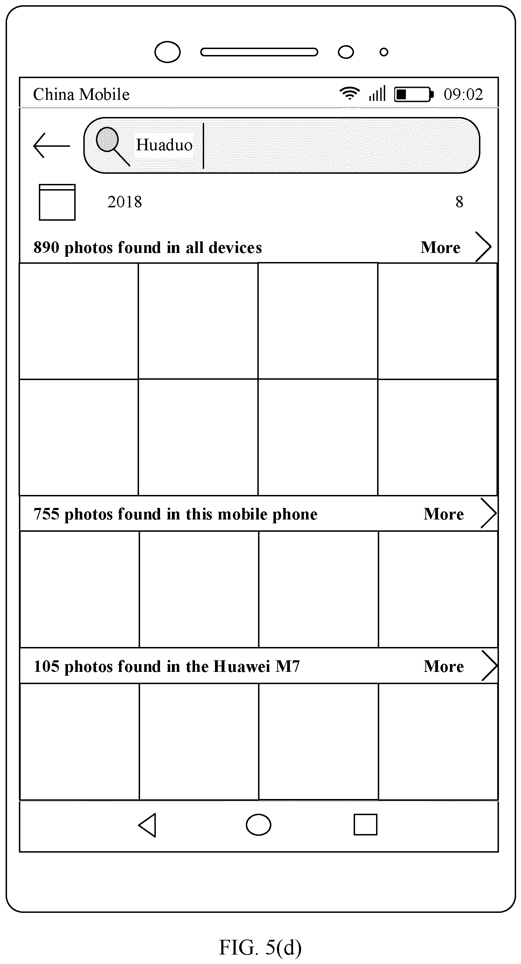

Refer to FIG. 5(d). The GUI is another search interface of the album application. When the mobile phone detects that the user has entered a keyword "huaduo" in the search box, the mobile phone may search for photos related to "huaduo" in this mobile phone and the other devices. The mobile phone finds a total of 890 photos related to "huaduo" in this mobile phone and the other devices. The mobile phone finds 755 photos related to "huaduo" in this mobile phone. The mobile phone finds 105 photos related to "huaduo" in Huawei M7 in the other devices, and 130 photos related to "huaduo" in Honor Vision in the other devices.

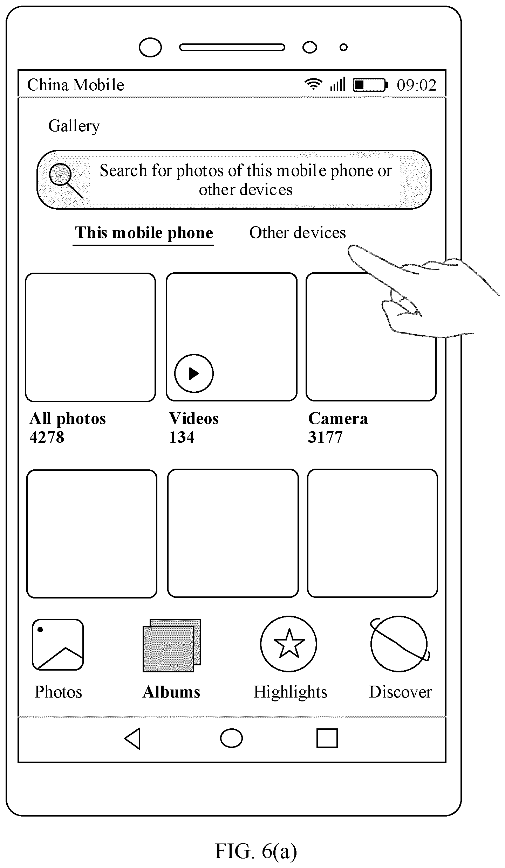

The other devices in FIG. 3(a) to FIG. 3(g) to FIG. 5(a) to FIG. 5(d) are under a same account as this mobile phone for description. In this embodiment of this application, this mobile phone may further share data with another device under a different account. FIG. 6(a) to FIG. 6(c) show another group of GUIs according to an embodiment of this application.

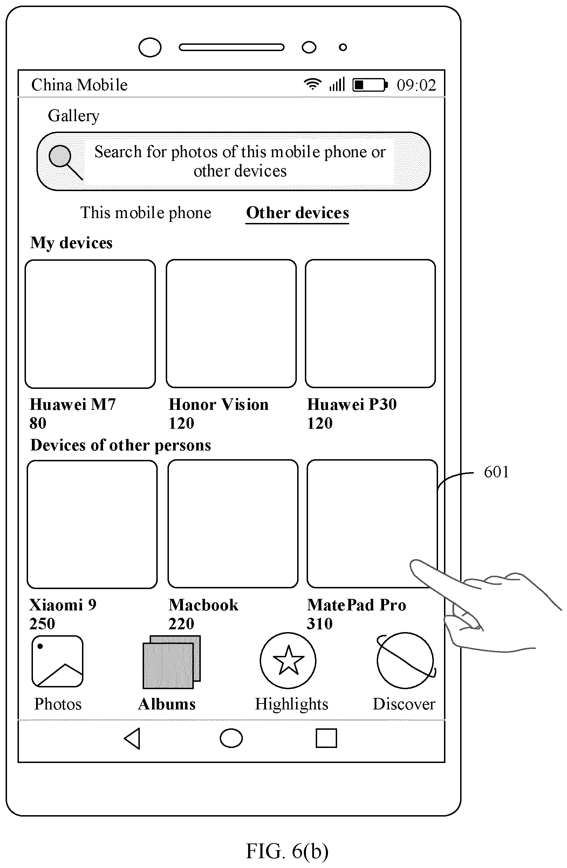

As shown in FIG. 6(a), the GUI is another display interface of an album application. When a mobile phone finds another device within a preset distance and under a same account or a different account, a subtitle "other devices" may be automatically displayed. A user can select "local" and "other devices" for browsing. After detecting an operation of tapping the "other devices" control by the user, the mobile phone may display a GUI shown in FIG. 6(b).

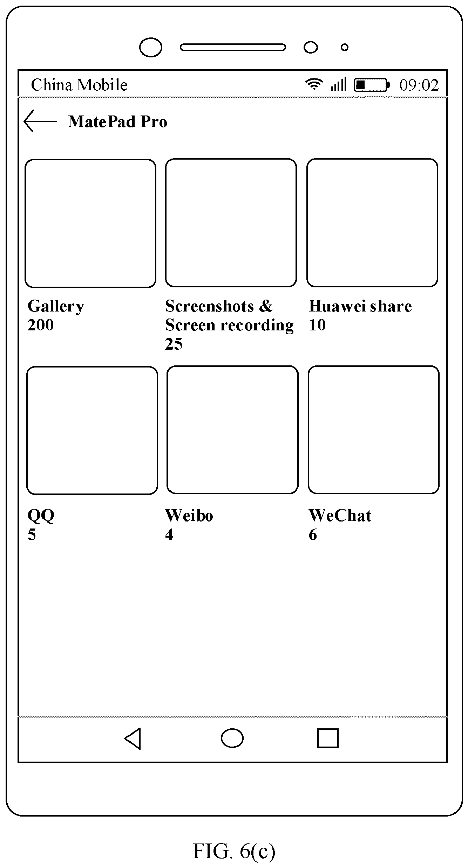

As shown in FIG. 6(b), the GUI is another display interface of the album application. The display interface may display information that is obtained by the mobile phone and that is about other devices within the preset distance and under a same account as this mobile phone ("my devices" shown in FIG. 6(b)), and the other devices include Huawei M7, Honor Vision, and Huawei P30. In addition, the display interface may also display information about other devices ("devices of other persons" shown in FIG. 6(b)) under other accounts that are in a same family group as a login account on the mobile phone, and the other devices include Xiaomi 9, a notebook computer (Macbook), and a tablet computer (MatePad Pro). The mobile phone may obtain information about a quantity of digital assets (for example, photos) on the other devices. As shown in FIG. 6(b), in "my devices", a quantity of photos stored on Huawei M7 is 80, a quantity of photos stored on Honor Vision is 120, and a quantity of photos stored on Huawei P30 is 120. In "devices of other persons", a quantity of photos stored on Xiaomi 9 is 250, a quantity of photos stored on Macbook is 220, and a quantity of photos stored on MatePad Pro is 310. When the mobile phone detects an operation that the user taps to view an album of MatePad Pro, the mobile phone may display a GUI shown in FIG. 6(c).

It should be understood that, in this embodiment of this application, the mobile phone may further share data with a device to which no account is logged in. For example, the mobile phone may automatically generate a QR code after opening the album. If the user wants to see, on the mobile phone, data on the device to which no account is logged in, the user may enable the QR code and scan the QR code by using the device to which no account is logged in. After authentication between the mobile phone and the device to which no account is logged in succeeds, the data can be shared between this mobile phone and the device to which no account is logged in.

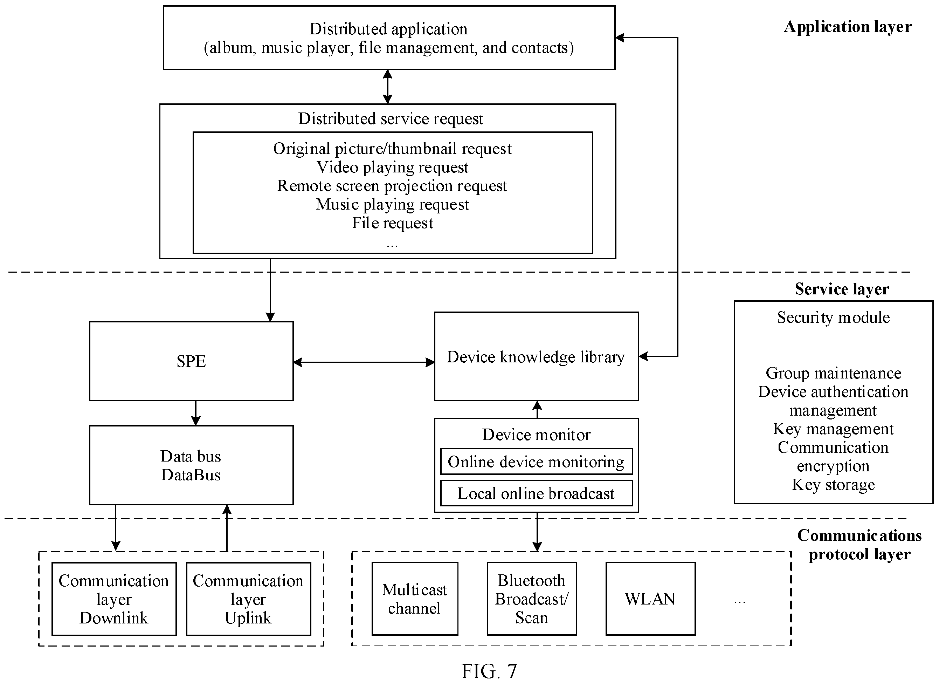

FIG. 7 is a diagram of another software structure of an electronic device according to an embodiment of this application. With reference to FIG. 7, the following describes an authentication procedure, a service request procedure, a service data synchronization procedure, and a device detection procedure between this electronic device and another device in this embodiment of this application.

### Authentication procedure

When the electronic device detects that a user taps a distributed application, for example, an album application, a music player application, a file management application, or a contacts application, the electronic device may automatically trigger an authentication procedure for a device nearby.

For example, after the electronic device detects that the user taps an icon of a distributed application on a home screen of the electronic device, the electronic device opens the application, and displays an interface of the application. Specifically, when the electronic device detects that the user taps an icon of an application (for example, an album application, a music player application, a file management application, or a contacts application) on the home screen of the electronic device, if the application is a distributed application, the application at a distributed application layer sends an identifier (for example, a process identifier (process identifier, PID)) corresponding to the application and a process name corresponding to the application to a device monitor at a service layer. The device monitor may determine, by using the identifier and the process name, which app is started. For example, the electronic device determines, by determining a process identifier and a process name of the album, that the album application is started. The device monitor may generate a Bluetooth low energy (Bluetooth low energy, BLE) broadcast data packet by using an online broadcast module of this electronic device. The broadcast data packet may carry a device name and an address (for example, a MAC address or an IP address) of this electronic device. The device monitor may broadcast the BLE broadcast data packet by using a Bluetooth broadcast/scanning module at a communications protocol layer. The electronic device may further receive, in real time by using the Bluetooth broadcast/scanning module, a BLE broadcast response sent by another device nearby. The BLE broadcast response may carry device name information of the another device. After receiving the broadcast response, the device monitor may determine, by using the name information of the another device, whether the another device is a device under a same account, or whether the another device is a device under another account in a same family group. If the another device is the device under the same account, authentication between the electronic device and the another device may succeed directly. Alternatively, if the another device is the device under the another account in the same family group, authentication between the electronic device and the another device may succeed directly. The distributed application may listen to a device knowledge library. After discovering that information about another device is added to the device knowledge library, the distributed application may display corresponding information on a display interface.

For example, as shown in FIG. 3(c), after determining that there is another device nearby under a same account, the mobile phone may automatically display the "other devices" on the display interface.

The device monitor may also store a device name, a device type, device status information, capability information, address information, and the like of another device in the device knowledge library.

In this embodiment of this application, if the device monitor determines that the device name carried in the broadcast response does not indicate the another device under the same account or the device under the another account in the same family group, the device monitor may further send information about the device name to a distributed response at an application layer. In addition, the distributed application prompts the user that the device is not the another device under the same account or is not the device under the another account in the same family group. The distributed application may prompt the user to perform authentication on the device by scanning a QR code. For a specific authentication process by using the QR code, refer to the description in the foregoing embodiment. For brevity, details are not described herein again. In an embodiment, the user may also send a QR code screenshot to a far field device, and the far field device scans the QR code to establish a network connection to a current device. In this way, the far field device can synchronize information about digital assets to the current device.

In an embodiment, in addition to discovering a device nearby through near field communication, the electronic device may also discover another device through a far field communications technology. For example, the electronic device may establish a network connection to the far field device by using the far field communications technology such as a server or a cellular network.

### Service request procedure

After the authentication between the electronic device and the another device succeeds, the distributed application may invoke a distributed service request at the application layer to generate a corresponding service request.

For example, when the electronic device detects that the user opens the album application, the album application may invoke the distributed service request to generate a thumbnail request. The distributed service request may send the thumbnail request to a service processing engine (service processing engine, SPE) at the service layer.

In this embodiment of this application, the SPE is a logical processing unit, and may be configured to perform a service proxy function, analyze and process a service request, and select a proper device/hardware/service for an application. After receiving a corresponding service request, the SPE may select a proper device for the service request by using the device knowledge library. For example, the device knowledge library stores information about a device A, a device B, and a device C. The SPE may first obtain status information of the device A, the device B, and the device C. If the SPE finds that the device A is in an offline state, and the device B and the device C are in an online state, the SPE may determine that the device B and the device C are proper devices.

The SPE may forward the service request and address information of other devices (the device B and the device C) to a data bus (DataBus). The data bus delivers the service request and the address information to a communications layer downlink module at the communications protocol layer. The communications layer downlink module may forward the service request to the other devices based on the address information of the other devices.

Correspondingly, after receiving the service request, the other devices parse the service request and send the request to SPEs in the other devices. The SPEs of the other devices act as agents of local services, and return service responses and corresponding data to the electronic device. In this case, a service request process is completed.

After obtaining a response and data that are sent by another device, the electronic device may store the data in a data storage area at the service layer, and may further send corresponding data to the distributed application at the application layer, so that the user can view the data on the another device by using the display interface.

For example, as shown in FIG. 3(d), when detecting that the user taps the "other devices", the mobile phone may trigger the foregoing service request procedure, and the mobile phone may request picture metadata from other devices (Huawei M7, Honor Vision, and Huawei P30). After receiving the metadata sent by the other devices, the electronic device may display, by using the display interface, quantities of photos in albums on the other devices.

For example, as shown in FIG. 3(g), after the mobile phone detects an operation of tapping a thumbnail of the photo 311 by the user, the foregoing service request procedure may be triggered, and the mobile phone may request data of the photo 311 with preset screen resolution from Huawei M7.

For example, as shown in FIG. 3(g), after the mobile phone detects an operation of tapping "locally saving" by the user, the foregoing service request procedure may be triggered, and the mobile phone may request original data of the photo 311 from Huawei M7.

### Service data synchronization procedure

Before the electronic device and the another device share data with each other, the electronic device needs to first establish a data transmission channel (DataBus PIPE) with the another device. After receiving the service request sent by the electronic device, the another device may invoke a DataBus PIPE establishment interface based on the service request, to establish the data transmission channel. After the data transmission channel is established, the another device may share data stored by the another device with the electronic device.

In this embodiment of this application, a data synchronization procedure between a first electronic device and a second electronic device may include first synchronization and incremental synchronization. The first synchronization is synchronization triggered when the first electronic device and the second electronic device establish a data transmission channel for the first time, and the first electronic device synchronizes data of the first electronic device to the second electronic device, or the second electronic device synchronizes data of the second electronic device to the first electronic device. The incremental synchronization is synchronization triggered when the data on the first electronic device and the data on the second electronic device change. For example, when the data on the first electronic device changes (for example, some photos or videos are added to the first electronic device), the first electronic device may synchronize the data of the first electronic device to the second electronic device.

It should be understood that when a network connection between the first electronic device and the second electronic device is not disconnected or an inter-device connection is not disconnected, the data transmission channel between the first electronic device and the second electronic device may exist all the time. When data needs to be synchronized, the data can be synchronized directly through the data transmission channel.

### Device detection

In an authentication process, the electronic device needs to scan information sent by another device nearby, to determine a proper device nearby. However, some devices may go offline after a period of time, and therefore, the electronic device needs to detect another device.

For example, the electronic device may periodically send a BLE broadcast data packet. If the electronic device receives a broadcast response of another device within preset duration after sending the BLE broadcast data packet, the electronic device may determine that the another device is in an online state. Conversely, if the electronic device does not receive a broadcast response within the preset duration, the electronic device may determine that the another device has been offline.

In an embodiment, the electronic device does not find a device B (the device B and the electronic device are under a same account) during initial scanning, but finds the device B in a subsequent scanning process. In this case, the electronic device may store information about the device B in the device knowledge library. In addition, the device monitor may further send updated information of the device to the distributed application, to display the information about the device B on the display interface of the electronic device.

The distributed application may listen to information in the device knowledge library. When device information in the device knowledge library changes, the distributed application updates device information in real time by using the display interface. In addition, when sending a service request to the DataBus, the SPE may also send an updated device address to the DataBus based on the updated device information.

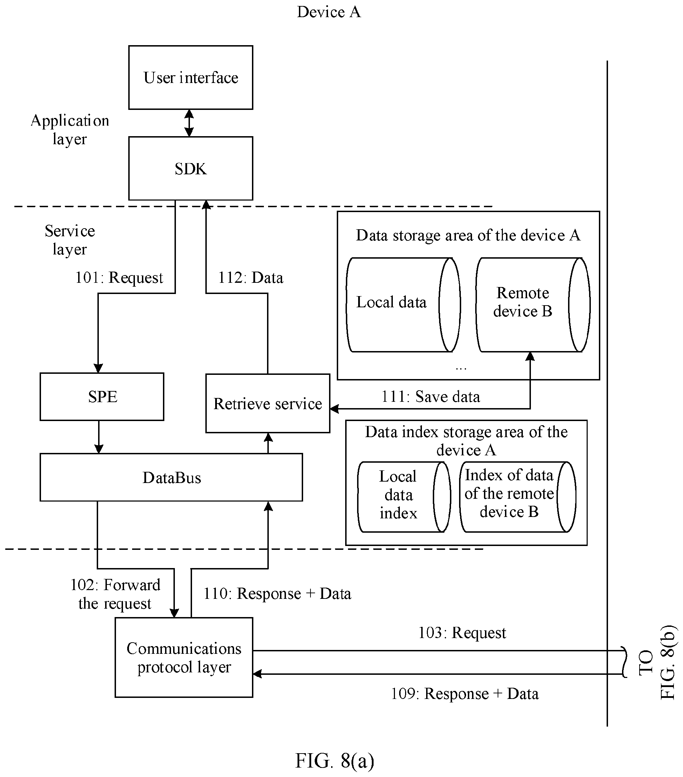

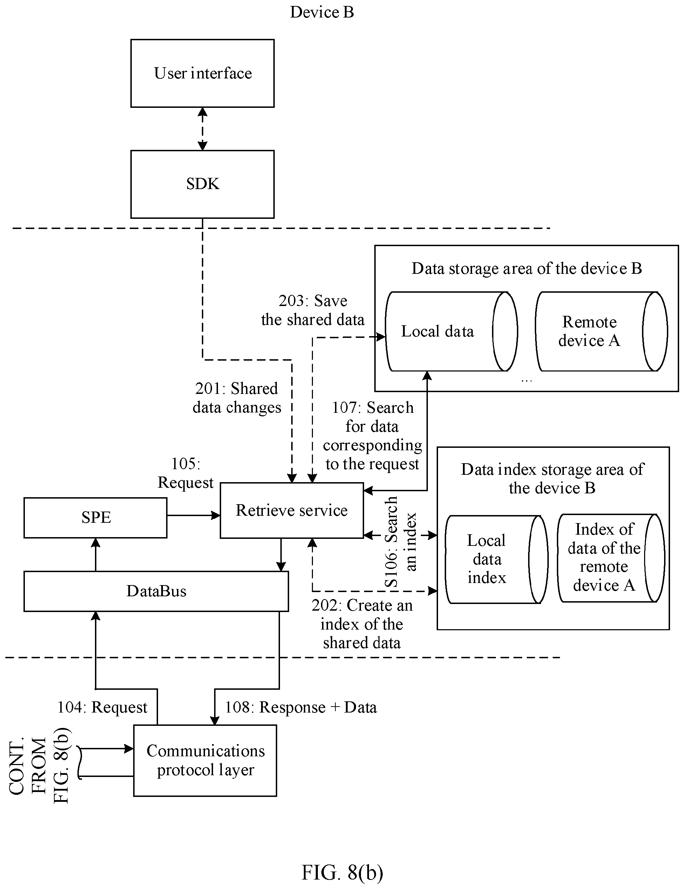

The following describes a data sharing process between a device A and a device B according to an embodiment of this application with reference to FIG. 8(a) and FIG. 8(b). The process includes the following steps.

101: When the electronic device detects a user operation on a display interface of a distributed application, the distributed application initiates a service request by invoking a software development kit (software development kit, SDK) of a distributed service of a service. The SDK sends the service request to an SPE at a service layer. Specific content of the service request may be determined based on the user operation.

For example, as shown in FIG. 3(c), after the electronic device detects an operation of tapping the "other devices" by the user, the SDK sends a service request for picture metadata and thumbnails to the SPE.

For another example, as shown in FIG. 3(f), after the mobile phone detects an upward sliding operation of the user on the display, the mobile phone may display more photo thumbnails downward. When the mobile phone previously requests picture metadata and thumbnails from Huawei M7, the mobile phone may obtain only 200 photo thumbnails. When the mobile phone scrolls down the photo thumbnails, if the mobile phone determines that it is about to scroll to the 200th photo thumbnail, the SDK may automatically initiate a service request for photo thumbnails to Huawei M7 again. This can ensure continuity when the user views the photo thumbnails.

For another example, as shown in FIG. 3(f), after the mobile phone detects an operation of tapping the photo 311 by the user on the display, the mobile phone may request data of the photo 311 with preset screen resolution (for example, a photo with a 1080 x 1920 pixel value) from Huawei M7.

For another example, as shown in FIG. 3(g), after the mobile phone detects an operation of tapping the "locally saving" by the user, the mobile phone may request original data of the photo 311 from Huawei M7.

102: The SPE forwards the service request and an address of the device B to a communications protocol layer by using a data bus.

103: The communications protocol layer sends a service request to the device B based on the address of the device B.

104: After receiving the service request, a communications protocol layer of the device B, forwards the service request to an SPE of the device B.

105: The SPE of the device B continues to forward the service request to a retrieval service.

106: After obtaining the service request, the retrieval service may parse the service request, and further search a data index storage area of the device B for a corresponding data index.

For example, after the retrieval service of the device B determines that the service request is used to request picture metadata and thumbnails, the retrieval service of the device B may search the data index storage area for a corresponding index of photos stored on the device B. The index of the photos herein may be an index established after the device B classifies the photos stored on the device B. For example, the device B may classify the photos stored on the device B based on information such as time, a task, a location, and a label. The index of the photos stored on the device B may also indicate classification information of each photo.

107: The retrieval service searches for data in a data storage area of the device B based on the service request.

For example, after the retrieval service of the device B determines that the service request is used to request picture metadata and thumbnails, the retrieval service of the device B may search the data storage area for information about the picture metadata and the thumbnails that are stored on the device B. The data storage area of the device B may include local data and data of the remote device A. During searching, the device B may search the local data, to obtain corresponding data.

For example, Table 1 shows picture metadata.

**Table 1**

| Number | Field | Type | Description |
|---|---|---|---|
| 1 | DEVICE_ID | long | Device name |
| 2 | DISPLAY_NAME | long | File name |
| 3 | PATH | string | Absolute path of a file |
| 4 | SIZE | string | File size |
| 5 | HASH | string | File hash value |
| 6 | DATA_ADDED | long | Time at which a file is added to a data storage area |
| 7 | DATE MODIFIED | long | Modification time of a file |
| 8 | WIDTH | int | File width |
| 9 | HEIGHT | int | File height |
| 10 | TYPE | int | File type: picture or video |
| ... | ... | ... | ... |

It should be understood that the picture metadata described in Table 1 is merely an example. This is not limited in this embodiment of this application.

It should be further understood that the picture metadata may be obtained by using original data of pictures stored in a memory of the electronic device. An internal memory is different from the data storage area in FIG. 8(a) and FIG. 8(b). The internal memory stores original data of pictures, and a data amount of the original data is large. Picture metadata and thumbnails stored in the data storage area are obtained by using the original data of the pictures, and data amounts of the metadata and the thumbnails are small.

As shown in FIG. 3(c), when an SDK sends a service request for picture metadata and thumbnails to an SPE, data synchronized by Huawei M7 to the mobile phone is actually picture metadata and thumbnails.

As shown in FIG. 3(f), after detecting an upward sliding operation of the user on a display, the mobile phone may request more thumbnails from Huawei M7 again when the mobile phone is about to display all the previously stored thumbnails.

As shown in FIG. 3 (g), after detecting an operation of tapping the "locally saving" by the user, the mobile phone may request original data of the photo 311 from Huawei M7.

In this embodiment of this application, when the current device accesses and manages digital assets on another device, the current device does not directly copy original data on the another device to the current device. This helps improve a browsing speed of the user, and can save storage space of the electronic device.

108: The retrieval service of the device B forwards a response to the service request and found data to the communications protocol layer of the device B.

109: The communications protocol layer of the device B sends the response and the data to the communications protocol layer of the device A.

For example, a picture is used as an example. The device B may send, to the device A, picture metadata and a thumbnail that are stored on the device B. For example, if the device B stores 1,000 pictures, the device B may send metadata information of the 1,000 pictures and thumbnail information of 200 pictures to the device A.

110: The communications protocol layer of the device A sends the received response and data to a retrieval service of the device A.

111: The retrieval service of the device A stores the received data in a data storage area of the device A.

As shown in FIG. 8(a) and FIG. 8(b), the data storage area of the device A includes local data of the device A and data of the remote device B. After receiving the data sent by the device B, the device A may store the data in the data of the remote device B.

In an embodiment, after receiving metadata sent by the device B, the device A may establish an index of the data based on information in the metadata, and store the index of the metadata of the device B in a data index storage area of the device A.

For example, a picture is used as an example. The device B stores 1,000 pictures. In this case, the device B may send metadata of the 1,000 pictures to the device A. The metadata includes time at which a picture is created, a location on which the picture is created, a category label of the picture, and the like. A structure of the metadata may be shown in Table 2.

**Table 2**

| Metadata | Time at which a picture is created | Location on which the picture is created | Category label of the picture | ... |
|---|---|---|---|---|
| Metadata 1 | May 3, 2019 | Huadu District, Nanjing | Portrait | ... |
| | 10:00 AM | | | |
| Metadata 2 | February 13, 2019 | Longgang District, Shenzhen | Food | ... |
| | 11:00 AM | | | |
| Metadata 3 | January 3, 2020 | Beilin District, Xi'an | Portrait | ... |
| | 09:08 AM | | | |
| Metadata 4 | February 12, 2020 | Beilin District, Xi'an | Portrait | ... |
| | 13:54 PM | | | |
| Metadata 5 | May 3, 2019 | Yuhuatai District, Nanjing | Food | ... |
| | 10:00 AM | | | |
| ... | ... | ... | ... | ... |
| Metadata 1000 | March 23, 2020 | Shanghai | Beach | ... |
| | 20:00 PM | | | |

After receiving the 1,000 pieces of metadata, the device B may establish indices of the 1,000 pieces of metadata based on content of the 1,000 pieces of metadata, and store the established indices in the remote device B in the data index storage area of the device A.

For example, the device A may establish an index table of the 1,000 pictures in a data index storage area of the remote device B in the data index storage area of the device A, as shown in Table 3.

**Table 3**

| Category 1 | Category 2 | Metadata |
|---|---|---|
| Time | 2020 | Metadata 3, Metadata 4, ..., and Metadata 1000 |
| | 2019 | Metadata 1, Metadata 2, Metadata 5... |
| | ... | ... |
| Location | Nanjing | Metadata 1, Metadata 5... |
| | Xi'an | Metadata 3, Metadata 4... |
| | Shenzhen | Metadata 2... |
| | ... | ... |
| Label | Portrait | Metadata 1, Metadata 3, Metadata 4... |
| | Food | Metadata 2, Metadata 5... |
| | Beach | Metadata 1000... |
| | ... | ... |

It should be understood that the classification manners shown in Table 2 and Table 3 are merely examples. In this embodiment of this application, an index for the received metadata may be alternatively established based on another classification manner. For example, the location category may further include a category 3. The category 3 may include area information of each city, for example, Nanjing may be further divided into Huadu District of Nanjing, Yuhuatai District of Nanjing, and the like, and Xi'an may be further divided into Beilin District of Xi'an, Yanta District of Xi'an, and the like.

In this embodiment of this application, the current device may receive metadata sent by another device, and establish a corresponding index based on information in the metadata. In this way, when a user searches the current device for locally stored data and data that is stored data on the another device, a search result is conveniently and quickly displayed to the user.

For example, as shown in FIG. 5(c), after the user enters the keyword "hua" in the search box, the mobile phone may display classified results obtained based on the keyword "hua". The search results for "hua" include "Huadu District" and "Yuhuatai District" classified based on locations, and "Sister Xiaohua" and "Huahua" classified based on names of photographed persons.

For example, as shown in FIG. 5(d), after the user enters the keyword "huaduo" in the search box, the mobile phone may display classified results obtained based on the keyword "huaduo". The mobile phone may display eight photos that are related to "huaduo" and that are taken in 2018 (may also display photos that are related to "huaduo" and that are taken in 2019 and 2020, not shown in the figure), and may also display a quantity of photos that are related to "huaduo" and that are found on this mobile phone and photo data that is related to "huaduo" and that is found on other devices.

112: The retrieval service of the device A sends the data to the SDK at the application layer, and a user interface of the device A displays the data to the user.

For example, as shown in FIG. 3(d), the retrieval service may send quantity information of pictures in Huawei M7, Honor Vision, and Huawei P30 to the SDK. The mobile phone can also display a quantity of pictures in each device through the display interface.

In this application, the current device may store, in a data storage area, metadata information sent by another device. For example, Huawei M7 may send, to the mobile phone, 80 pieces of metadata information corresponding to 80 pictures stored on Huawei M7. In this case, the retrieval service may collect statistics on a quantity of pieces of received metadata. A statistic result of the quantity of pieces of metadata is a quantity of pictures stored on Huawei M7.

For example, as shown in FIG. 3(e), after the mobile phone detects the operation of tapping the folder 305 by the user, the retrieval service may send, to the SDK, information about the thumbnails in the folder 305 in Huawei M7, and a display displays the GUI shown in FIG. 3(f).

201: When the data stored in the device B changes, an application of the device B invokes the SDK to indicate the retrieval service that the shared data changes.

For example, after the user further takes a plurality of photos by using the device B, the SDK may be triggered to indicate the retrieval service that the data of the photos in the album application changes.

202: The retrieval service establishes a new shared data index in the data index storage area of the device B.

For example, the device B updates, based on label information of the newly added photos, the index information stored in the data index storage area of the device B.

203: The retrieve service updates the information in the data storage area of the device B.

For example, the device B adds corresponding metadata and thumbnail information to the data storage area of the device B based on the newly added photos.

Then, the device B may send updated data information to the communications protocol layer of the device A by using the communications protocol layer. The retrieval service of the device A updates the data of the remote device B in the data storage area of the device A. After the update is completed, the retrieval service may further indicate updated data to the SDK at the application layer, and the user interface of the device A displays the updated data of the device B to the user.

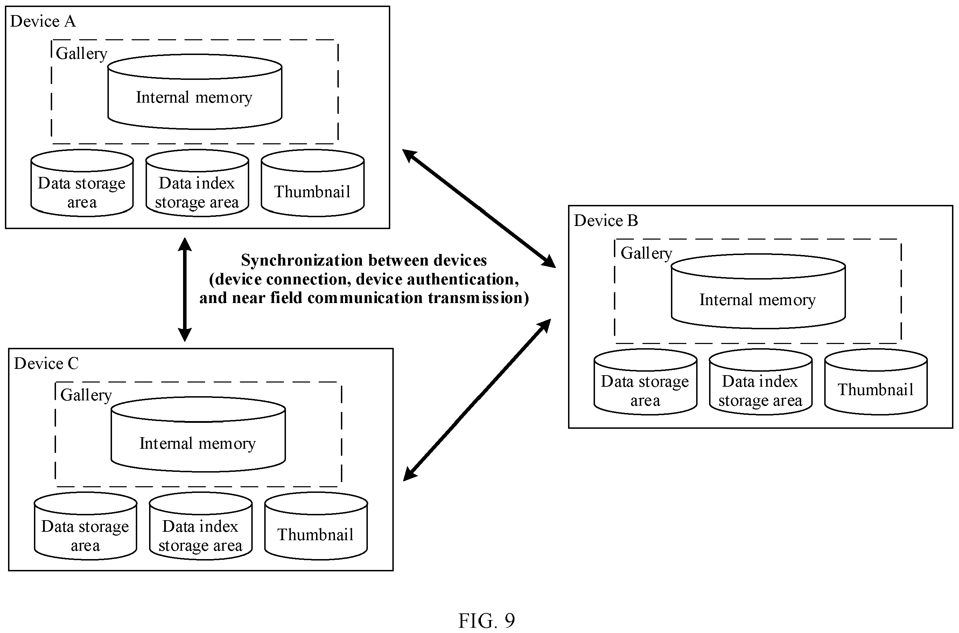

FIG. 9 is a schematic diagram of distributed browse, search, and management for pictures and videos according to an embodiment of this application.

As shown in FIG. 9, internal memories of a device A, a device B, and a device C store original data of respective pictures and videos. The device A, the device B, and the device C may separately determine metadata, data index, and thumbnail information in data storage areas at a service layer based on the original data stored in the internal memories.

For example, after a user takes a photo by using a mobile phone in Huadu District, Nanjing, a size of original data of the photo is 8 MB, and the mobile phone may store the original data of the photo in an internal storage area. In addition, the mobile phone can also store a device name (for example, Huawei M7) of a device that takes the photo, a file name (for example, a picture suffix .JPG), an absolute path of a file (for example, a physical path of the photo in the internal storage area), a file size (for example, a size 8 MB of the photo), time at which the file is added to the device (for example, 10:00 AM on February 14, 2019), a file width (for example, 500 pixels), a file height (for example, 500 pixels), and a file type (for example, a picture) in the data storage area. The mobile phone may store an index of the photo in a data index storage area. For example, the mobile phone may automatically identify information in the photo, and classify the photo (or add a corresponding label to the photo) based on the information in the photo. When the metadata of the photo is synchronized from Huawei M7 to a current device, the current device may establish an index (for example, by using Luence) for various types of data (for example, time, location, and label information) in the photo based on the index, to facilitate subsequent search. The mobile phone may store a thumbnail corresponding to the photo in a thumbnail database.

It should be understood that the data storage area and the thumbnail database in FIG. 9 may be located in the data storage area shown in FIG. 8(a) and FIG. 8(b). The data index storage area in FIG. 9 is the data index storage area in FIG. 9.

In an embodiment, the data storage area, the data index storage area, and the thumbnail database shown in FIG. 9 may further be isolated according to two dimensions: {Group ID, App ID}, and the mobile phone may control corresponding access permission.

For example, Table 4 shows a data storage structure.

**Table 4**

| Group ID | Included device | App ID | Data |
|---|---|---|---|
| My devices | Huawei M7 | Album | Album metadata, album data index, and thumbnail |
| | Honor Vision | Music | Music metadata and music data index |
| | Huawei P30 | ... | ... |
| Devices of other persons | Huawei P20 | Album | Album metadata, album data index, and thumbnail |
| | MateBook X | Music | Music metadata and music data index |
| | MatePad Pro | ... | ... |
| ... | ... | ... | ... |

For example, the music metadata may include a file name and a file size of the music; and information used for another service category and search, such as a music author, a name of an album to which the music belongs, and a style.

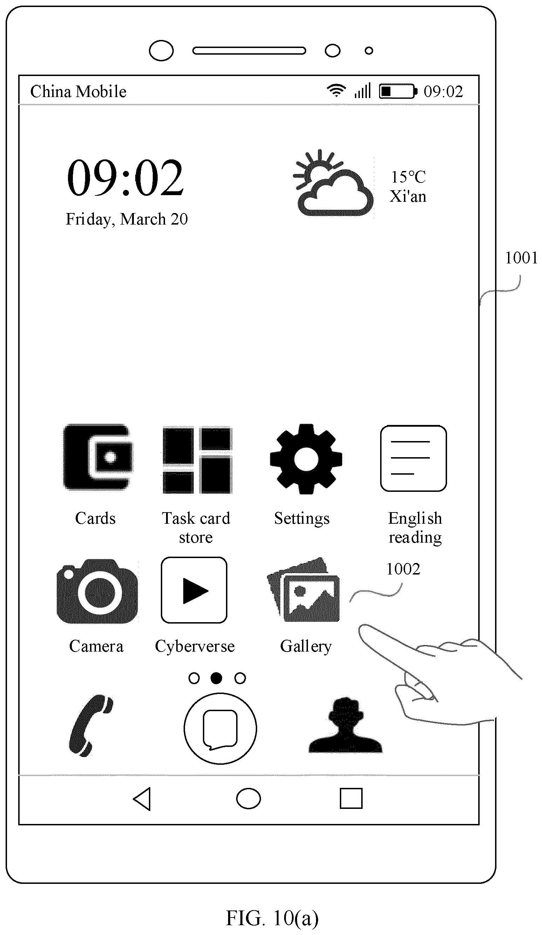

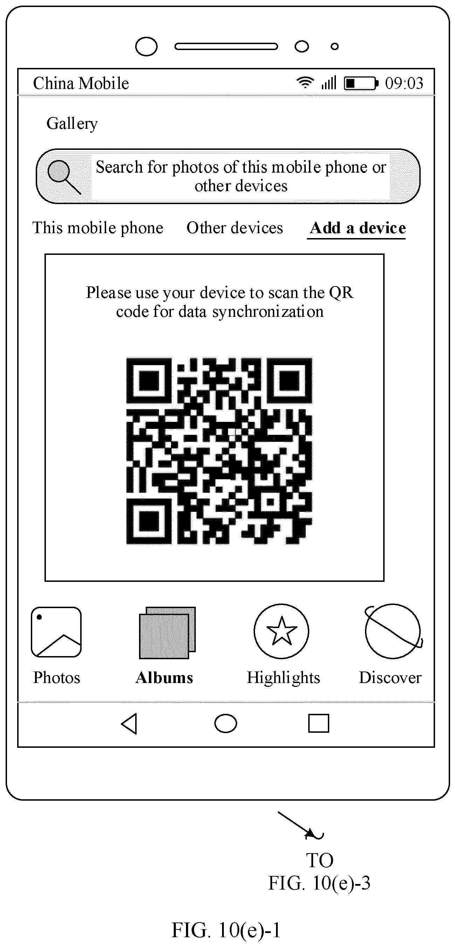

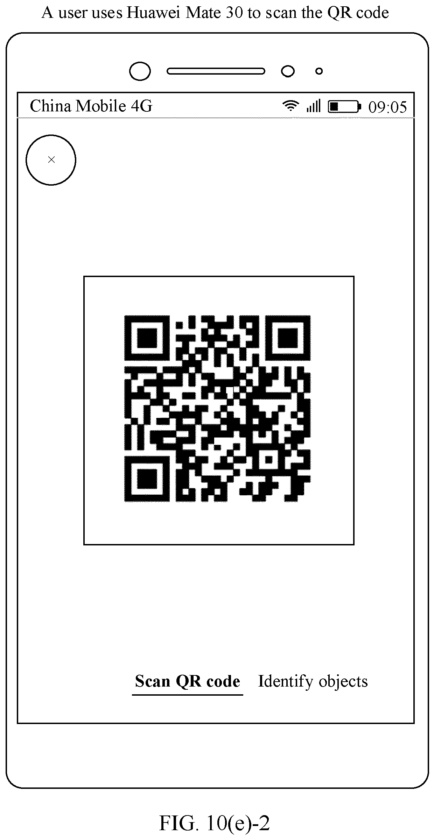

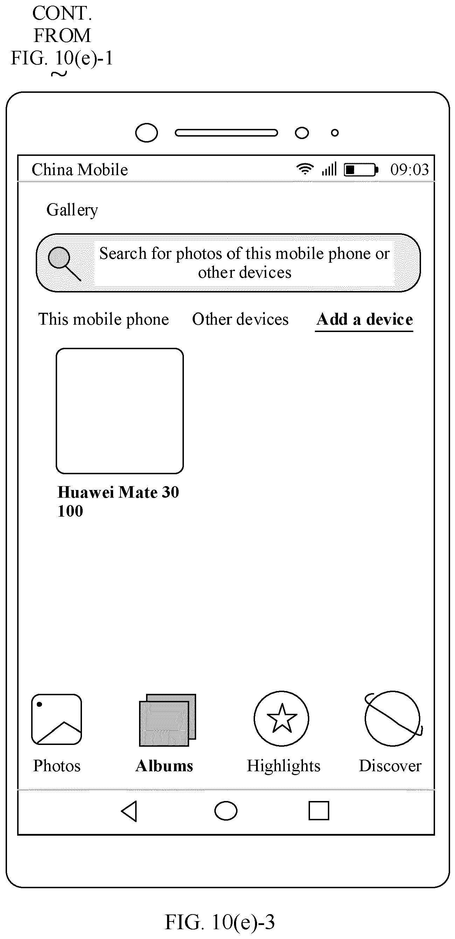

FIG. 10(a) to FIG. 10(e)-3 show another group of GUIs of a mobile phone.

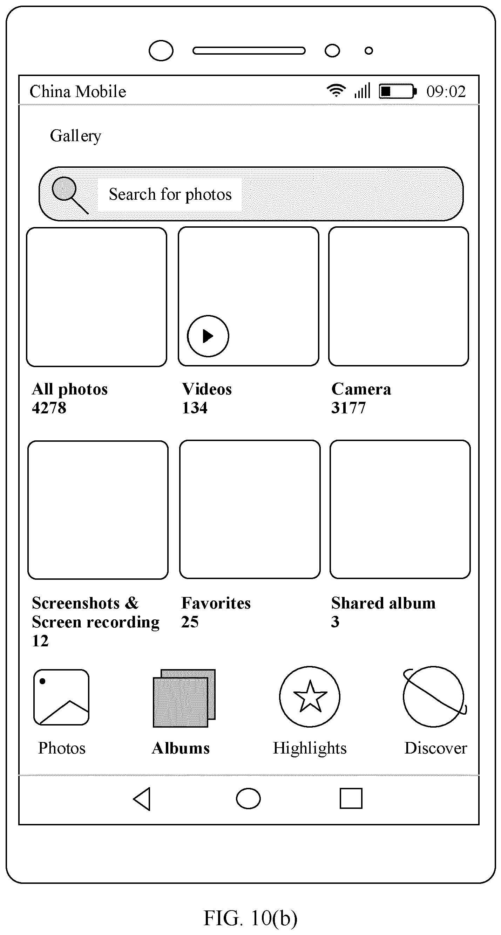

Refer to FIG. 10(a). The GUI is a home screen 1001 of the mobile phone. After detecting an operation of tapping an icon 1002 of an album application (APP) on the home screen 1001 by a user, the mobile phone may open the album application, and display a GUI shown in FIG. 10(b).

Refer to FIG. 10(b). The GUI is a display interface of the album application. The display interface may display that the mobile phone currently stores 4,278 photos and 134 videos. 3,177 photos are obtained by a camera, 12 photos are obtained through screenshot and screen recording, 25 photos are in favorites, and three photos are in a shared album. In addition, when detecting an operation of opening the album application by the user, the mobile phone also automatically searches for a device nearby under a same account or under another account associated with the account.

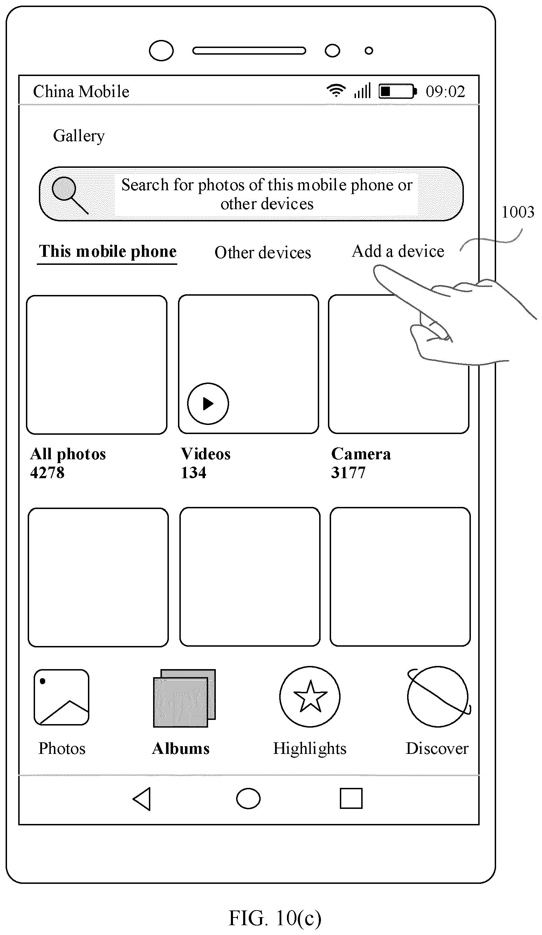

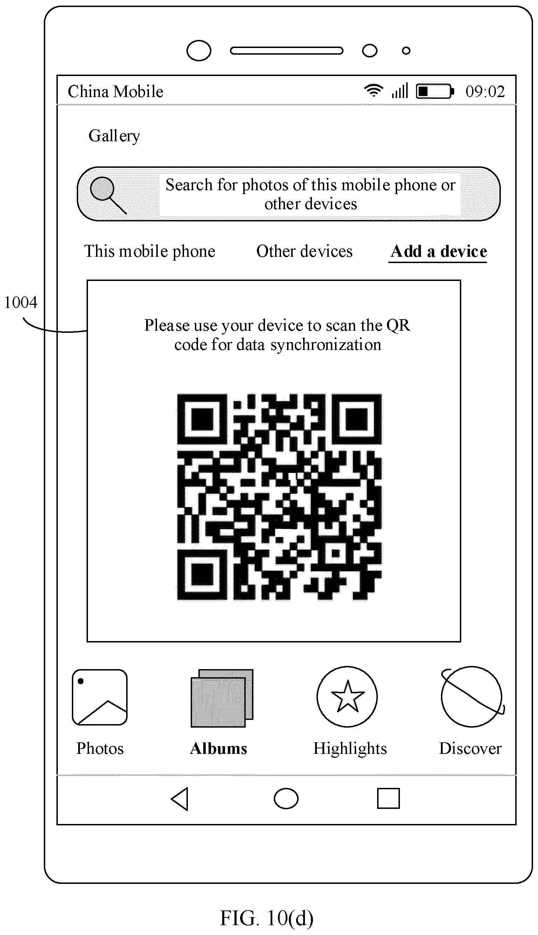

Refer to FIG. 10(c). The GUI is another display interface of the album application. When the mobile phone finds another device within a preset distance and under an account of a user A or under an account associated with the account of the user A, subtitles "other devices" and "add a device" may be automatically displayed. The user can select "local" and "other devices" for browsing. When the mobile phone detects that the user taps the "other devices", the mobile phone may display device information of another device under the account of the user A and information about another device under the account associated with the account of the user A. After detecting an operation of tapping the "add a device" control 1003 by the user, the mobile phone may display a GUI shown in FIG. 10(d).

In this embodiment of this application, the account associated with the account of the user A may be an account that is in a same family group as the account of the user A, or an account authorized by the account of the user A.

Refer to FIG. 10(d). The GUI is a display interface for adding a data synchronization device. When the mobile phone detects that the user taps the "add a device", the mobile phone may pop up a prompt box 1004 on a screen, where the prompt box 1004 includes a text prompt "Please use your device to scan the QR code for data synchronization". The user may use a device to which no account is logged in (or a device to which an account unassociated with the account of the user A is logged in) to scan the QR code, to implement data synchronization between the mobile phone and the device to which no account is logged in.

In an embodiment, in addition to displaying the QR code, the display interface for adding the data synchronization device may further display some group information about social software, such as a WeChat group or an address book. The user may also determine a to-be-added device by selecting a corresponding social software group. In this embodiment of this application, another device and an added device may be devices close to the current device, or may be devices for long-distance communication. For example, the user may send a screenshot of QR code information to another device that is far away from the user. After receiving the screenshot, the another device scans this QR code to establish a network connection to the current device, to share data of the another device with the current device.

Refer to FIG. 10(e)-1 to FIG. 10(e)-3. After the mobile phone detects an operation of scanning the QR code by the device (for example, Huawei Mate 30) to which no account is logged in, the mobile phone may display, in the "add a device", that there are a total of 100 pictures on Huawei Mate 30.

It should be understood that, for a process in which the current device detects that another electronic device (for example, Huawei Mate 30) scans a QR code to perform data synchronization between the current device and the another electronic device, refer to the foregoing description. For brevity, details are not described herein again.

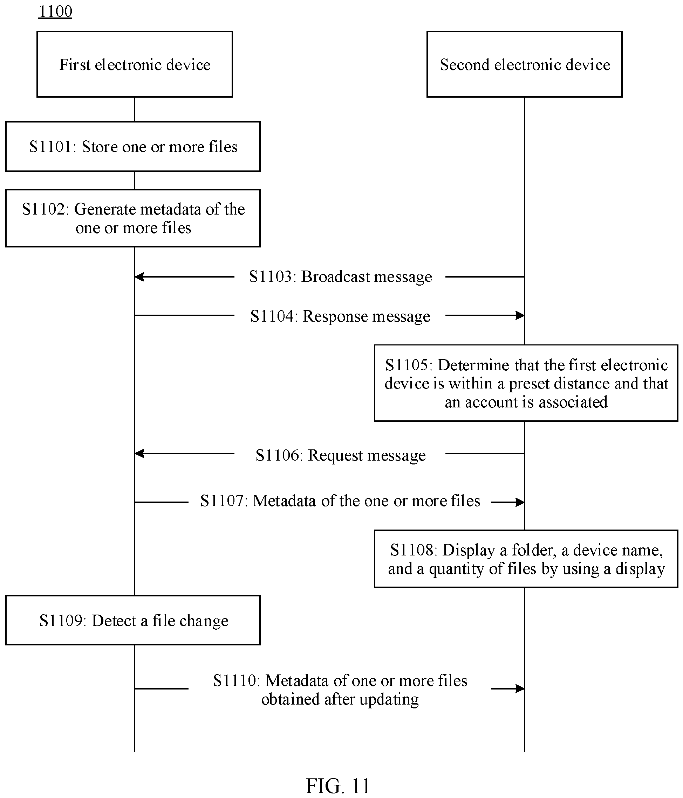

FIG. 11 is a schematic flowchart of a data sharing method 1100 according to an embodiment of this application. As shown in FIG. 11, the method is performed by a first electronic device and a second electronic device. The method includes the following steps.

S1101: The first electronic device stores one or more files.

For example, if a first application is an album application, a first file is a video or a picture. When the first electronic device detects that a user shoots a video or a picture by using a camera, the first electronic device may locally store the video or the picture. For example, the first electronic device may store the video or the picture in an external storage card of the first electronic device.

For example, if a first application is a music application, a first file may be music. When the first electronic device detects that a user downloads a piece of music, the first electronic device may obtain the piece of music from a server and locally store the piece of music. For example, the first electronic device may store the music in an external storage card of the first electronic device.

S1102: The first electronic device generates metadata for each of the one or more files.

For example, there are 80 pictures in the album application in the first electronic device. In this case, the first electronic device may generate 80 pieces of metadata for the 80 pictures, and each piece of metadata may include information such as a picture name, a picture size, a creation event, and a creation location of a picture.

For example, there are 10 pieces of music in the music application of the first electronic device. In this case, the first electronic device may generate metadata corresponding to the 10 pieces of music, and each piece of metadata may include information such as a music name, a music size, a music author, and an album to which the music belongs.

Optionally, the first electronic device may further establish an index of each file based on information about the generated metadata. An album application is used as an example. For a process of establishing an index of each picture, refer to the processes in Table 2 and Table 3. For brevity, details are not described herein again.

Optionally, if the file is a picture, the first electronic device may further generate a thumbnail based on each of one or more pictures in the album application.

It should be understood that, in this embodiment of this application, the metadata generated by the first electronic device may be stored in a storage area for storing metadata (for example, in the local data in the data storage area of the device B in FIG. 8(a) and FIG. 8(b)). A data index established for the metadata may be stored in a data index storage area (for example, in the local data index in the data index storage area of the device B in FIG. 8(a) and FIG. 8(b)).

S1103: The second electronic device sends a broadcast message. The broadcast message is used to search for an electronic device within a preset distance, and the broadcast message may include a device name and address information of the second electronic device.

For example, the broadcast message is a Bluetooth low energy BLE broadcast message.

In this embodiment of this application, the second electronic device may periodically send the broadcast message, or may send the broadcast message when the second electronic device is idle, or may send the broadcast message when detecting that the user starts a specific application.

S1104: The first electronic device sends a response message to the second electronic device based on the address information. The response message includes a device name of the first electronic device.

S1105: The second electronic device determines, based on the response message, that the first electronic device is the electronic device within the preset distance, and a login account on the first electronic device is associated with a login account on the second electronic device.

In an embodiment, the second electronic device may determine, based on signal strength or signal quality of the response message sent by the first electronic device, whether a distance between the first electronic device and the second electronic device is within the preset distance.

The signal strength and the signal quality (the following uses a long term evolution (long term evolution, LTE) system as an example for description) in this embodiment of this application may include one or more of the following parameters:
(1) reference signal received power (reference signal received power, RSRP);
(2) a received signal strength indicator (received signal strength indicator, RSSI);
(3) reference signal received quality (reference signal received quality, RSRQ); and
(4) a signal to interference plus noise ratio (signal to interference plus noise ratio, SINR).

It should be understood that the foregoing uses only an example in which the distance between the second electronic device and the first electronic device is determined by the second electronic device based on the signal strength or the signal quality. The distance between the second electronic device and the first electronic device may be alternatively determined in another manner. This is not limited in this embodiment of this application.

Optionally, that the login account on the first electronic device is associated with the login account on the second electronic device includes: The login account on the first electronic device is the same as the login account on the second electronic device; or the login account on the first electronic device and the login account on the second electronic device are in a same family group; or the login account on the first electronic device is an account authorized by the login account on the second electronic device.

For example, the second electronic device may store information about a device name of another electronic device that is under the login account of the second electronic device. In this case, the second electronic device may determine, based on the device name in the response message, that the first electronic device is a device under a same account.

For example, the second electronic device may further store a device name of a device that is under another account in the same family group as the login account of the second electronic device. In this case, the second electronic device may determine, based on the device name in the response message, that the first electronic device is the device under the same account, or the device under the another account in the family group.

In this embodiment of this application, if the first electronic device and the second electronic device are devices under the same account, or devices under different accounts in the family group, the first electronic device and the second electronic device may be directly trusted each other by using a trust ring.

S1106: The second electronic device sends a request message to the first electronic device. The request message is used to request metadata of one or more files of the first application.

In an embodiment, after determining that the first electronic device is within the preset distance and that the login account on the first electronic device is associated with the login account of the second electronic device, the second electronic device may send the request message to the first electronic device.

In an embodiment, the second electronic device may alternatively send the request message to the first electronic device when detecting that the user opens the first application.

In an embodiment, the second electronic device may alternatively send a plurality of request messages to the first electronic device, where each request message is used to request metadata in a different application.

S 1107: The first electronic device sends the metadata of the one or more files of the first application to the second electronic device.

For example, the second electronic device may store the metadata of the one or more files sent by the first electronic device in a data storage area of the second electronic device (for example, in the local data in the data storage area of the device A in FIG. 8(a) and FIG. 8(b)).

In this embodiment of this application, the second electronic device may determine the first electronic device that is associated with the login account on the second electronic device and that is within the preset distance, and the second electronic device may request the metadata of the file of the application from the first electronic device. This helps the user quickly view, by using the second electronic device, a status of digital assets stored on the first electronic device, and meets a user requirement for performing centralized management on digital assets scattered on various devices, thereby improving user experience.

In addition, the first electronic device shares the metadata corresponding to each file rather than original data of each file with the second electronic device. In this case, in a data sharing process, the user may further quickly browse a status of digital assets on another device, and more storage space of the electronic device is saved.

In an embodiment, the second electronic device may generate a corresponding metadata index based on the received metadata of the one or more files sent by the first electronic device, and store the corresponding metadata index in a data index storage area of the second electronic device (for example, in the data index of the remote device B in the data index storage area of the device A in FIG. 8(a) and FIG. 8(b)).

In this embodiment of this application, after obtaining the metadata of each file stored on the first electronic device, the second electronic device may establish the index of each file based on the metadata. In addition, the second electronic device may also establish an index of locally stored metadata of each file. This is convenient for the user to quickly find the file that the user wants to view when subsequently searching for a file that the user wants to view, thereby helping improve user experience.

Optionally, if the first application is the album application, in addition to sending the metadata of the one or more pictures to the second electronic device, the first electronic device may further send thumbnails of at least some pictures of the one or more pictures to the second electronic device. For example, if the first electronic device stores 1,000 pictures, the first electronic device may further use the response message to carry thumbnails of 200 pictures.

In this embodiment of this application, for the album application, the second electronic device may further request, from the first electronic device, the thumbnails of the one or more pictures in the album application in the first electronic device. In this way, after the user taps the folder, the second electronic device displays at least a part of the thumbnails of the one or more pictures to the user in a timely manner.

As shown in FIG. 3(f), after detecting an upward sliding operation of the user, the mobile phone may display the thumbnails in a scrolling manner. When the user is about to view the 200th thumbnail (for example, the user has viewed the 150th thumbnail), the mobile phone may be triggered to request more thumbnails from Huawei M7 again, which ensures that no freezing occurs when the user views the thumbnails.

S1108: The second electronic device displays a folder, the device name of the second electronic device, and a file quantity by using a display.

For example, as shown in FIG. 3(d), the mobile phone may display a folder 304, a device name "Huawei M7", and a file quantity "80" on the interface.

It should be understood that the mobile phone may receive 80 pieces of metadata from Huawei M7 in S1107. In this case, "80" displayed by the mobile phone on the interface indicates that the mobile phone determines that Huawei M7 stores 80 pictures.

If the mobile phone detects an operation of tapping the folder 304 by the user, the mobile phone may display the interface in FIG. 3(e) or FIG. 3(f). If the interface in FIG. 3(f) is directly displayed, the mobile phone may display a plurality of thumbnails on the interface. In S1107, Huawei M7 may also send the plurality of thumbnails to the mobile phone, and therefore, the interface of the mobile phone may actually be directly switched from the interface in FIG. 3(d) to the interface in FIG. 3(f), and no freezing occurs for the user.

Optionally, after the second electronic device detects an operation of tapping a thumbnail by the user, the second electronic device may request a picture with preset screen resolution from the first electronic device.

As shown in FIG. 3(f), after the mobile phone detects an operation of tapping the thumbnail 311 by the user, the mobile phone may display the picture shown in FIG. 3(g). This picture is actually not an original picture. The picture with the preset screen resolution occupies less storage space compared with the original picture, so that a browsing speed of the user can be relatively high. The GUI shown in FIG. 3(g) may further include information such as photographing time and a photographing location of the picture, so that the user can further learn of details about the picture.

For example, space occupied by a thumbnail is about 20 KB, space occupied by a picture with preset screen resolution is about 200 KB, and space occupied by original data of the picture is about 5 MB to 20 MB.

As shown in FIG. 3(f), after detecting an operating of tapping the "locally saving" by the user, the mobile phone may request original data of the picture from Huawei M7, and locally store the original data sent by Huawei M7.

In this embodiment of this application, the second electronic device requests original data of a picture from the first electronic device only when the user wants to store the picture on the first electronic device to the second electronic device locally. In this way, in a process in which the second electronic device displays pictures of the first electronic device to the user, the second electronic device does not need to store original data of each picture stored on the first electronic device, so that the user quickly browses a status of digital assets on another device, and more storage space of the electronic device is saved.

In this embodiment of this application, the metadata is file information including a file name and a file size of a file. A thumbnail is a picture obtained after a picture is reduced according to a specified proportion. The thumbnail occupies very small storage space. A picture with preset screen resolution and original data of a picture are pictures, but occupy different storage space. Space occupied by the picture with the preset screen resolution is also less than space occupied by the original data of the picture.

Optionally, after the second electronic device detects that the user enters a keyword in a search box of the first application, the second electronic device may display a search result based on the keyword, an index of local metadata, and an index of metadata received from the first electronic device.

For example, in FIG. 5(c), after the mobile phone detects that the user enters a keyword "hua" in the search box, the mobile phone may display a search result of the keyword "hua" based on an index of locally stored metadata and an index of metadata sent by another device. The search result includes pictures with photographing locations in "Huadu District" and "Yuhuatai District", and pictures with user names "Sister Xiaohua" and "Huahua".

For example, in FIG. 5(d), after the mobile phone detects a keyword "huaduo" entered by the user in the search box, the mobile phone may display a search result of the keyword "huaduo" based on an index of locally stored metadata and an index of metadata sent by another device. The search result includes pictures that are related to "huaduo" and that are taken in 2018, and a quantity of pictures that are related to "huaduo" on the mobile phone and the another device.

S1109: The first electronic device detects that a file in the first application changes.

S1110: The first electronic device sends metadata of one or more updated files to the second electronic device.

For example, a picture is used as an example. If Huawei M7 detects that the user takes two pictures by using the camera, a quantity of pictures stored in Huawei M7 increases from 80 to 82. In this case, Huawei M7 may send updated metadata to the current mobile phone. For example, Huawei M7 may send metadata of the two newly added pictures to the current mobile phone, or may send metadata of the two newly added pictures and corresponding thumbnails.

When a quantity of files on the first electronic device decreases, the first electronic device may send metadata of all files after the reduction to the second electronic device, and indicate the second electronic device to overwrite the previous data with the data that is newly sent by the first electronic device. Alternatively, the first electronic device may indicate which files are reduced, so that the second electronic device deletes corresponding metadata of the files.

In this embodiment of this application, when metadata in a shared file stored on the first electronic device changes, for example, the first electronic device detects that the user adds some files to or deletes some files from the shared file, the first electronic device may send updated metadata to the second electronic device. In this way, the second electronic device may update the metadata of the shared file on the first electronic device in a timely manner, and display, to the user, a change status of the file stored on the first electronic device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. A part or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device and a second electronic device;
the first electronic device is configured to establish a network connection to the second electronic device, wherein the network connection is used to transmit data;
the first electronic device is further configured to: when detecting an operation of searching for a target file by a user, request, from the second electronic device, a shared file associated with the target file;
the second electronic device is further configured to send the shared file to the first electronic device; and
the first electronic device is further configured to display a first interface, wherein the first interface comprises an identifier of a shared file of the first electronic device and an identifier of a shared file of the second electronic device.

2. The system according to claim 1, wherein the shared file comprises original data or metadata, and the metadata is attribute description information of each file in the shared file.

3. The system according to claim 1 or 2, wherein the first interface further comprises a device name of the second electronic device.

4. The system according to any one of claims 1 to 3, wherein that the first electronic device establishes a network connection to the second electronic device comprises that the first electronic device communicates with the second electronic device through a short-range wireless connection, or the first electronic device communicates with the second electronic device through a long-range wireless connection.

5. The system according to any one of claims 1 to 4, wherein the target file is a multimedia file;
the first electronic device is further configured to request, from the second electronic device, thumbnails of one or more multimedia files stored on the second electronic device; and
the second electronic device is further configured to send the thumbnails of the one or more multimedia files to the first electronic device.

6. The system according to claim 5, wherein the first electronic device is further configured to: when detecting an operation of tapping a first thumbnail by the user, request a first multimedia file corresponding to the first thumbnail from the second electronic device, wherein the thumbnails of the one or more multimedia files comprise the first thumbnail, and the first multimedia file is a multimedia file with preset screen resolution;
the second electronic device is further configured to send the first multimedia file to the first electronic device; and
the first electronic device is further configured to display a second interface, wherein the second interface comprises the first multimedia file.

7. The system according to claim 6, wherein the second interface further comprises a first control for local storage; the first electronic device is further configured to: when detecting an operation of tapping the first control by the user, request a second multimedia file corresponding to the first thumbnail from the second electronic device, wherein the second multimedia file is original data of a multimedia file corresponding to the thumbnail;
the second electronic device is further configured to send the second multimedia file to the first electronic device; and
the first electronic device is further configured to store the second multimedia file on the first electronic device.

8. The system according to any one of claims 1 to 7, wherein the shared file comprises the metadata;
the first electronic device is further configured to: after receiving metadata that is of each file and that is sent by the second electronic device, establish an index of the metadata of each file based on the metadata of each file; and
the first electronic device is further configured to display a search result based on a keyword entered by the user and the index of the metadata.

9. The system according to any one of claims 1 to 8, wherein the second electronic device is further configured to: when detecting that the shared file is updated, send an updated shared file to the first electronic device; and
the first electronic device is configured to receive the updated shared file sent by the second electronic device.

10. The system according to any one of claims 1 to 9, wherein the first electronic device is further configured to: before establishing the network connection to the second electronic device, determine that a login account on the first electronic device is associated with a login account on the second electronic device.

11. A data sharing method, wherein the method is applied to an electronic device, and the method comprises:
establishing, by the electronic device, a network connection to another electronic device, wherein the network connection is used to transmit data;
when the electronic device detects an operation of searching for a target file by a user, requesting, by the electronic device from the another electronic device, a shared file associated with the target file;
receiving, by the electronic device, the shared file sent by the another electronic device; and
displaying, by the electronic device, a first interface, wherein the first interface comprises an identifier of a shared file of the electronic device and an identifier of a shared file of the another electronic device.

12. The method according to claim 11, wherein the shared file comprises original data or metadata, and the metadata is attribute description information of each file in the shared file.

13. The method according to claim 11 or 12, wherein the first interface further comprises a device name of the another electronic device.

14. The method according to any one of claims 11 to 13, wherein the establishing, by the electronic device, a network connection to another electronic device comprises: communicating, by the electronic device, with the another electronic device through a short-range wireless connection, or communicating, by the electronic device, with the another electronic device through a long-range wireless connection.

15. The method according to any one of claims 11 to 14, wherein the target file is a multimedia file, and the method further comprises:
requesting, by the electronic device from the another electronic device, thumbnails of one or more multimedia files stored on the another electronic device; and
receiving, by the electronic device, the thumbnails that are of the one or more multimedia files and that are sent by the another electronic device.

16. The method according to claim 15, wherein the method further comprises:
when the electronic device detects an operation of tapping a first thumbnail by the user, requesting, by the electronic device, a first multimedia file corresponding to the first thumbnail from the another electronic device, wherein the thumbnails of the one or more multimedia files comprise the first thumbnail, and the first multimedia file is a multimedia file with preset screen resolution;
receiving, by the electronic device, the first multimedia file sent by the another electronic device; and
displaying, by the electronic device, a second interface, wherein the second interface comprises the first multimedia file.

17. The method according to claim 16, wherein the second interface further comprises a first control for local storage, and the method further comprises:
when the electronic device detects an operation of tapping the first control by the user, requesting, by the electronic device, a second multimedia file corresponding to the first thumbnail from the another electronic device, wherein the second multimedia file is original data of a multimedia file corresponding to the thumbnail;
receiving, by the electronic device, the second multimedia file sent by the another electronic device; and
storing, by the electronic device, the second multimedia file on the electronic device.

18. The method according to any one of claims 11 to 17, wherein the shared file comprises the metadata, and the method further comprises:
after the electronic device receives metadata that is of each file and that is sent by the another electronic device, establishing, by the electronic device, an index of the metadata of each file based on the metadata of each file; and
displaying, by the electronic device, a search result based on a keyword entered by the user and the index of the metadata.

19. The method according to any one of claims 11 to 18, wherein the method further comprises: receiving, by the electronic device, an updated shared file sent by the another electronic device.

20. The method according to any one of claims 11 to 19, wherein the method further comprises:
before establishing the network connection to the another electronic device, determining that a login account on the electronic device is associated with a login account on the another electronic device.

21. An electronic device, comprising:
a display;
one or more processors; and
one or more memories, wherein
the one or more memories store one or more computer programs, the one or more computer programs comprise instructions, and when the instructions are executed by the one or more processors, the electronic device is enabled to perform the following steps:
establishing a network connection to another electronic device, wherein the network connection is used to transmit data;
when detecting an operation of searching for a target file by a user, requesting, from the another electronic device, a shared file associated with the target file;
receiving the shared file sent by the another electronic device; and
displaying a first interface, wherein the first interface comprises an identifier of a shared file of the electronic device and an identifier of a shared file of the another electronic device.

22. The electronic device according to claim 21, wherein the shared file comprises original data or metadata, and the metadata is attribute description information of each file in the shared file.

23. The electronic device according to claim 21 or 22, wherein the first interface further comprises a device name of the another electronic device.

24. The electronic device according to any one of claims 21 to 23, wherein that the electronic device establishes the network connection to the another electronic device comprises that the electronic device communicates with the another electronic device through a short-range wireless connection, or the electronic device communicates with the another electronic device through a long-range wireless connection.

25. The electronic device according to any one of claims 21 to 24, wherein the target file is a multimedia file, and when the instructions are executed by the one or more processors, the electronic device is enabled to perform the following steps:
requesting, from the another electronic device, thumbnails of one or more multimedia files stored on the another electronic device; and
receiving the thumbnails that are of the one or more multimedia files and that are sent by the another electronic device.

26. The electronic device according to claim 25, wherein when the instructions are executed by the one or more processors, the electronic device is enabled to perform the following steps:
when detecting an operation of tapping a first thumbnail by the user, requesting a first multimedia file corresponding to the first thumbnail from the another electronic device, wherein the thumbnails of the one or more multimedia files comprise the first thumbnail, and the first multimedia file is a multimedia file with preset screen resolution;
receiving the first multimedia file sent by the another electronic device; and
displaying a second interface, wherein the second interface comprises the first multimedia file.

27. The electronic device according to claim 26, wherein the second interface further comprises a first control for local storage, and when the instructions are executed by the one or more processors, the electronic device is enabled to perform the following steps:
when detecting an operation of tapping the first control by the user, requesting a second multimedia file corresponding to the first thumbnail from the another electronic device, wherein the second multimedia file is original data of a multimedia file corresponding to the thumbnail;
receiving the second multimedia file sent by the another electronic device; and
storing the second multimedia file on the electronic device.

28. The electronic device according to any one of claims 21 to 27, wherein the shared file comprises the metadata, and when the instructions are executed by the one or more processors, the electronic device is enabled to perform the following steps:
after receiving metadata that is of each file and that is sent by the another electronic device, establishing an index of the metadata of each file based on the metadata of each file; and
displaying a search result based on a keyword entered by the user and the index of the metadata.

29. The electronic device according to any one of claims 21 to 28, wherein when the instructions are executed by the one or more processors, the electronic device is enabled to perform the following step:
receiving an updated shared file sent by the another electronic device.

30. The electronic device according to any one of claims 21 to 29, wherein when the instructions are executed by the one or more processors, the electronic device is enabled to perform the following step:
before establishing the network connection to the another electronic device, determining that a login account on the electronic device is associated with a login account on the another electronic device.
